# EUROPEAN PATENT APPLICATION

(11) **EP 3 499 442 A1**
(43) Date of publication of application: **19.06.2019**
(21) Application number: 19156168.7
(22) Date of filing: 12.05.2016
(51) Int. Cl.: G06Q 10/08, G06Q 10/04, G06Q 50/28

(54) **MAIL PIECE ROUTING SYSTEM AND METHOD FOR ROUTING MAIL PIECES IN A DELIVERY NETWORK**

(30) Priority: 13.05.2015 NL 2014800
(62) Divisional of application: 16169317.1
(71) Applicant: TNT Holdings B.V., 2132 LS Hoofddorp (NL)
(72) Inventor: HOLLEMAN, Pieter, 2132 LS HOOFDDORP (NL); REE, Maarten Sicco Dirk, 2132 LS HOOFDDORP (NL)
(74) Representative: De Vries & Metman

(57) **Abstract**

A mail piece routing system and method is disclosed for routing mail pieces through a delivery network comprising network stations for delivery of one or more pieces of a consignment. Upon receipt of a consignment order, the computer systems calculates a scheduled path for delivery of the consignment through the delivery network. The scheduled path is defined from successive predefined path segments between network stations. Each piece is assigned to delivery pipelines between successive network stations on the scheduled route. Upon measuring the physical characteristics of a mail piece, routing of the mail pieces at successive network stations may be affected.

## Description

### FIELD OF THE INVENTION

The invention relates to a mail piece routing system and method for controlling the routing mail pieces through a delivery network. More specifically, the invention relates to such a system and method, wherein the delivery network comprises a plurality of network stations and wherein at least the first network station comprises a measurement system for measuring physical characteristics of the mail piece and wherein a second network station located downstream from the first network station comprises a routing device for routing the mail piece to a further network station.

### BACKGROUND

In the past decade, the growth of delivery networks for delivery of mail pieces by service providers from an origin address OA to a destination address DA has rapidly increased and is expected to increase further due to phenomena such as online shopping. Mail pieces include letters, small objects, medium size objects and large objects. One or more mail pieces may constitute a consignment.

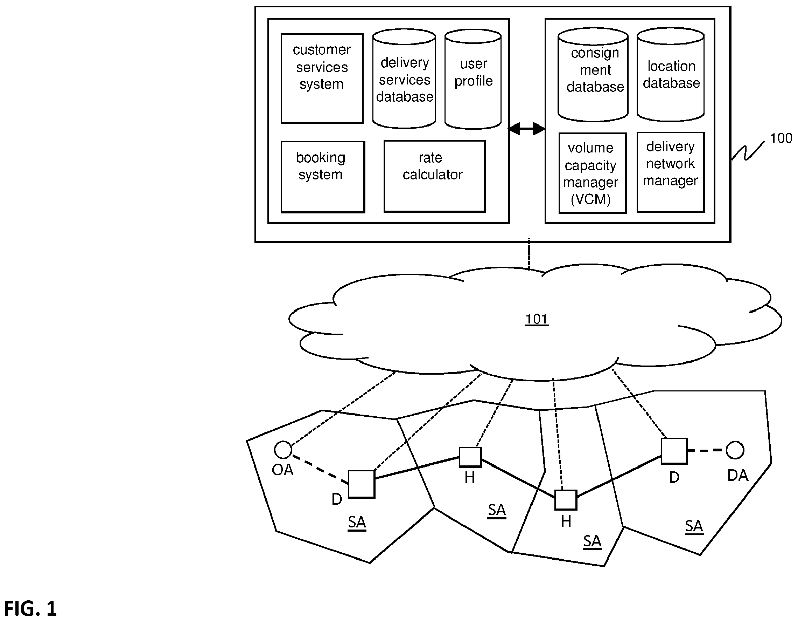

The delivery network comprises several network stations, e.g. depots D and hubs H, through which the mail pieces are routed to arrive at a destination address DA as shown in FIG. 1. Each network is associated with a service area SA. Physical transport of the mail pieces between network stations is conducted using trucks, aircrafts and other delivery vehicles. Delivery networks may span wide areas, e.g. continents, and may contain tens of hubs and hundreds to thousands of depots.

Often, an agreed delivery time applies for the delivery of the consignment. Service providers typically offer several service levels, such as economy delivery and express delivery, for which different delivery times (and delivery costs) apply to convey a consignment from an origin address through the delivery network to the destination address.

Service providers may convey millions of consignments through the delivery network each week. Obviously, consignment flows must be managed within such delivery networks in order to efficiently route the consignments through the delivery network while meeting agreed delivery times.

Customers, seeking the delivery service of a service provider provide delivery information to the computer system of the service provider by means of a delivery order. The delivery information entails the destination address and may contain physical characteristics, most notably the weight and volume of the mail piece(s) of the consignment.

Currently, transport capacity in the delivery network is planned in terms of numbers of consignments and types (road, air) of movement that occur in the delivery network and on the basis of the delivery information provided by the customer.

As shown in FIG. 1, a delivery service provider will operate a computer system 100 comprising a Volume Capacity Manager (VCM) that receives information on the consignments that arrive at and leave from network stations D, H via a network 101. The monitoring of the consignments and the capacity planning is typically based on historic delivery volumes. In order to monitor (e.g. track) and manage the flow of consignments, the mail pieces are provided with a marking (e.g. an identifier, such as a bar code or a QR code), which is registered with the network by scanning a code that is attached to the piece.

Information on the consignment may be linked to the marking and stored in a consignment database. The consignment information may include the physical characteristics (weight and dimensions) of the consignment as provided by the customer. The information on the physical characteristics may be left blank. These characteristics are initially used for determining a price that is billed to a customer. Each time a consignment arrives at a depot or leaves the depot, the marking is scanned, typically using a hand scanner, such that the system recognizes the ID and is informed about the current location of the mail piece in the delivery network.

US 5,043,908 discloses a self-monitoring mail delivery system wherein mail is tracked as it passes through multiple delivery stages. A schedule is created of expected arrival times for each stage. Should a mail piece not arrive in time, the system is alerted to initiate a search for the late or missing mail piece, or to take other corrective action, such as expediting delivery of late pieces. A data centre monitors the operations and provides management information to help enhance deliveries.

Consignments are registered with the delivery network when they enter the delivery network on the basis of order information provided by the customers. Thereafter the consignment is transported through the delivery network to the destination address DA. At certain times the network management system will receive a location where the consignment has been detected.

Capacity planning is based on the information provided by customer (weight, dimensions, appearances, etc.) that often deviates from the actual physical state. Such events will have a substantial influence on the accuracy of the planning process thus leading to suboptimal services.

Hence, due to the fact that a delivery service provider does not have an accurate overview of the physical status of consignments in the delivery network, it is not possible to execute accurate network capacity planning and contingency planning (both at the level of a depot or hub and at the level of the delivery network).

### SUMMARY

It is an object of the present disclosure to provide an improved mail piece routing system and method for routing mail pieces through a delivery network comprising a plurality of network stations.

To that end, one aspect of the disclosure pertains to a mail routing system configured for routing a mail piece through a delivery network comprising at least a first network station, a second network station located downstream of the first network station and a third network station located downstream of the second network station. The mail routing system comprises a computer system, at least one measurement system, connected to the computer system, and at least one routing device, connected to the computer system.

The at least one measurement system is located at the first network station and is configured for measuring physical characteristics of the mail piece. Example of physical characteristics include the weight of the mail piece, the shape of the mail piece, the volume of the mail piece and/or the stack ability of the mail piece.

The at least one routing device is located at the second network station and configured for routing the mail piece.

The mail routing system is configured to receive, at the computer system, a delivery order comprising information indicative of an origin address associated with the first network station, a destination address associated with the third network station and physical characteristics of the mail piece. It should be appreciated that one or more or all of the physical characteristics in the delivery order may not have been entered, i.e. left blank.

The computer system is configured to calculate a scheduled path for delivery of the mail piece upon receipt of the delivery order, wherein the scheduled path is defined from successive path segments from the first network station via at least the second network station to the third network station, the path segments including a first path segment outbound from the first network station, a second path segment outbound from the second network station and a third path segment inbound to the third network station.

The computer system is configured to assign, upon receipt of the delivery order, the mail piece to a plurality of delivery pipelines between the first network station and the third network station, the plurality of delivery pipelines comprising at least a first delivery pipeline outbound from the first network station and defined over the first path segment, a second delivery pipeline outbound from the second network station and defined over the second path segment and a third delivery pipeline inbound to the third network station and defined over the third path segment, wherein the plurality of assigned delivery pipelines relate to a delivery time for delivery of the mail piece at the delivery address.

The mail routing system, most notably the measurement system at the first network station, is configured to measure the above-mentioned one or more physical characteristics of the mail piece. The measurement system will measure at least one of the physical characteristics of the mail piece, e.g. weight or volume and/or add physical characteristics of stack ability. The measurement data may be transferred to the computer system.

The mail piece routing system, most notably the computer system, is configured to reassign the mail piece to at least one further delivery pipeline, different from the second delivery pipeline, outbound from the second network station on the basis of the measured physical characteristics. Multiple pipelines may exist between two network stations, i.e. over a single predefined path segment. Pipelines may differ in one or more properties, such as the transport mode (air, road). Possibly, another property may be the service level (economy delivery, express delivery).

The mail piece routing system is configured to set the routing device at the second network station to route the mail piece to an outbound port of the second network station associated with the further delivery pipeline in accordance with the setting of the routing device for the mail piece. It should be noted that the routing to the outbound port associated with the further delivery pipeline does not necessarily entail that the mail piece is routed to a different network station. Instead, the transport mode or service level may be responsible for the setting of the routing device and for the routing or rerouting of the mail piece.

Each piece of the ordered consignment is assigned to delivery pipelines between successive network stations on the scheduled route. The combination of the delivery pipelines provides a delivery time for delivery of each piece of the consignment, when account is taken of the pick up at the origin address in the service area of the first network station and the delivery time of the mail piece in the service area of the third network station.

Other aspects of the disclosure involve a method for routing mail pieces through a delivery network, a computer system for use in the mail piece routing system and to a computer program or suite of computer programs for executing the method.

The disclosed system and method provide a dual-layer system comprising a scheduled route (first layer) over which delivery pipelines (second layer) are defined. Upon receipt of a delivery order, the scheduled route is determined from predefined path segments between the network stations on the basis of the origin address and the delivery address for the consignment. Each piece of the consignment is assigned to a plurality of delivery pipelines between successive network stations on the scheduled route on the basis of the physical characteristics in the delivery order. A delivery time is then associated with each piece of the consignment.

The delivery order may contain information about the physical characteristics of the consignment, e.g. for each individual mail piece. This information is referred to as the contractual measurement data. However, this information, though requested, may be entered incorrectly or not be provided at all.

A consignment may originate from an origin location (e.g. a private or enterprise address) and be delivered to a destination location (e.g. another private address or enterprise address). The delivery order is typically made from the origin location or another location associated with the origin location and the delivery time is the delivery time of the consignment for the destination location. Network stations of the delivery network are located between the origin location and the destination location. The first network station and third network station for delivery of the consignment are determined on the basis of the origin location resp. the destination location, e.g. on the basis of a service area associated with the first network station and the second network station wherein the origin location resp. the delivery location are located. Intermediate network stations between the first network station and the last network station are calculated.

Between two network stations in the delivery network, a predefined path segment may or may not exist. The existence of predefined path segments between network stations may change, for example over time. Over a single predefined path segment, one or more delivery pipelines may exist or be set up between two network stations. A delivery pipeline represents all pieces scheduled (i.e. for which a delivery order has been received) between two network stations within a given time interval. A delivery pipeline is an inbound pipeline for the network station by which the pieces of a consignment are received and an outbound pipeline for the corresponding network station from which the pieces of the consignment are sent.

The pipelines between successive stations enable propagation of information to each of network stations along the scheduled route in the delivery network on the expected volume on piece level. Accordingly, upon receipt of the delivery order, each of the network stations may immediately be informed of the future service and adaptations thereof required from the downstream network stations for each of the pieces of the consignment.

A default time for traversing a delivery pipeline is associated with each piece of the consignment. The default time may be determined from the length of the path segment and the average speed with a particular transport vehicle that can be achieved for the path segment. The default time may be different for different time intervals (e.g. different days, seasons, etc.) and may be obtained from historic data or real time data.

The first network station of the delivery network measures the physical characteristics of the mail piece, e.g. weight and volume of the mail piece. The actual physical characteristics may be found to deviate from the contractual information regarding the characteristics as received in the delivery order.

The measurement system may comprise weighing means and volume determination means. The weighing means outputs a weight of a mail piece and may e.g. be integrated in a conveyer belt system, manned station or dedicated area in a facility. Similarly, the volume determination means may comprises optical means (e.g. a camera and/or a laser system; or an ultrasonic system) and outputs a volume or data from which a volume can be determined or estimated. The volume determination means may be integrated with the conveyor belt. It should be appreciated that the volume determination means does not necessarily provide the exact volume of the mail piece, but may e.g. calculate a three-dimensional volume shape as the smallest enclosing rectangular box enclosing the mail piece. Further optical means, such as camera's, may be applied to measure further physical characteristics, such as stack ability or specific shape of the mail piece. The actual measurement data may be transferred to the computer system.

The disclosed mail routing system is configured to route or adapt the routing of the mail piece through the delivery network on the basis of the actual, i.e. measured, physical characteristics of the mail piece at a second network station downstream of the first network station.

It should be appreciated that routing may involve an internal and automatic operation by routing devices at a network station in the delivery network (e.g. routing devices located along a conveyer belt), wherein incoming mail pieces are automatically routed to certain locations within the network station, associated with delivery pipelines, where the mail piece(s) are loaded into a transport vehicle for transport to the next network station. Alternatively, the routing devices comprise displays (e.g. in forklift vehicle) indicating to which location with the network station the mail pieces (e.g. non-conveyable mail pieces) should be brought.

It should be noted that the distinction between consignments and pieces may be represented by consignment identifiers and piece identifiers. A single consignment identifier may be linked to several piece identifiers, each piece identifier corresponding to a single piece of the consignment. The computer system may have access to individual tables for consignments and pieces. The consignment tables contain, amongst others, the piece identifiers of the pieces contained in the consignment. Other information contained in the consignment tables include the service level, the transport mode (road, air), the origin address, the destination address, the first network station, the last network station, etc. The piece tables, each identified by a piece identifier, contain information associated with that single piece, e.g. physical characteristics such as the customer provided volume and/or weight of the piece. The computer system updates the physical characteristics, either by deletion of the contractual data or by adding the measured data, when physical characteristics are provided from the measurement system. Piece-level tables may inherit information from consignment-level tables.

It should be noted that in US 5,043,908, each stage of the mail piece delivery is represented by a mail processing station reading a tracking code, a destination address, and the weight of a mail piece. The weight of a mail piece is stored in combination with the destination address and triggers a theft alarm if the stored weight as measured at a previous station differs from the current weight measured at the current downstream station. The prior document does not teach that weight/volume of the pieces determine routing of the pieces.

In one embodiment, the computer system is configured to recalculate a further path segment, different from the second path segment, outbound from the second network station and inbound to a fourth network station and associated with the further delivery pipeline and wherein the mail piece routing system is configured for setting the routing device to route the mail piece to an outbound port associated with the further path segment. The embodiment enables the mail piece to be routed to another network station, and hence to be assigned to a further delivery pipeline, than the originally planned network station (and the second delivery pipeline).

In one embodiment, the computer system is configured to have access to a database, the database containing actual entries for of physical characteristics as measured by the measurement system. Routing may be based on the basis of the actual entries. The contractual entries are not required for this purpose. The database may also contain contractual entries for physical characteristics as received in the delivery order Storing both the contractual entries and the actual entries enables verification and determination of costs for executing the delivery order.

In one embodiment, the computer system is configured to trigger reassignment of the mail piece to the further delivery pipeline when a difference is detected between the contractual entries and the corresponding actual entries and, optionally, for setting the routing device to route the mail piece to the outbound port associated with the further delivery pipeline. The difference may be associated with characteristic deviation threshold for each of the characteristics. The embodiment facilitates automatic calculations of path segments, assignment to delivery pipelines and/or routing.

In one embodiment, the database may have further actual entries from measurement systems located at network stations downstream of the first network station. Deviations between actual entries as measured at the first network station and further actual entries as measured a downstream network station(s) may be used for detecting theft, leakage, etc.

In one embodiment, the mail piece routing system comprises a plurality of registration devices in association with the delivery pipelines and wherein the computer system is configured to receive registration events from the registration devices of network stations located at opposite ends of the further path segments and to monitor from the registration events, progress of the delivery of the mail piece vis a vis the delivery time for the mail piece.

Registration events in the delivery network continuously inform and update the delivery information. The computer system provides for efficient routing and rerouting of mail pieces through the delivery network. The computer system also provides planners with accurate forward looking information for managing consignment flows, such as viewing the total volume flow between any two network stations in a given time window and taking corrective actions.

Registration events are received from registration devices at one or more network stations of the delivery network for each of the one or more pieces of the consignment. Progress of the delivery through the delivery network of each of the one or more pieces of the consignment is analysed by verifying whether the delivery time can be met for each of the one or more pieces when receiving registration events.

Registration events may be triggered by scanning of the pieces of a consignment, e.g. a piece identifier associated with the consignment, such as a bar code or two-dimensional code. It should be appreciated that, whereas registration events come from the several network stations in the delivery network, registration events may also come from other locations/devices between the source location and the destination location. One registration event may e.g. occur during pickup of the piece(s) at the source location.

In one embodiment, pieces do no longer need to contain routing information. A marking (piece identifier) is sufficient to identify the piece and routing information can be provided to automatic piece routing systems or to handheld worker devices of workers sorting pieces internally in a network station upon reading the piece identifier.

An outbound delivery pipeline is associated with a path segment to a successive network station in the delivery network. In one disclosed embodiment, the computer system is configured to enable a user to take action for a mail piece and/or a consignment with regard to the delivery process through the delivery network. Corrective action may e.g. be taken on the basis of the actual physical characteristics becoming available for a mail piece. Examples of actions include:
- select the further delivery pipeline, optionally associated with the further path segment, upon receipt of the physical characteristics measured by the measurement system;
- assign the mail piece to a warehouse location;

The actions listed above enable a planner to manipulate delivery of the piece through the delivery network. Selection of the further delivery pipeline for the mail piece may e.g. result in the piece being conveyed to a another network station and/or using another transport mode (e.g. air instead of road) in order to be able to still reach the destination location within the delivery time despite the difference in the physical characteristic compared to the information in the delivery order or to at least reduce delay as much as possible. Existing capacity on the further delivery pipeline may be optimized. Furthermore, the subsequent network station and other downstream network stations are immediately informed on the expected arrival of the mail piece. Another example of selection of an alternative pipeline is obtained by changing the service level of a piece. If a change in the service level would reduce the delay of the mail piece now that the actual physical characteristics are known, such a change of service level may prove efficient. Similarly, mail pieces for which no capacity is available due to the difference in weight and/or volume, can be temporarily assigning pieces to a warehouse. The computer system sets the routing of the routing device on the basis of the action of the user.

In one disclosed embodiment, the computer system is further configured to enable a user to perform the action of creating the further path segment and the further delivery pipeline for a network station and re-assigning the mail piece to the new further delivery pipeline. The embodiment enables the planner to create new pipelines from a network station in order to convey mail pieces through the delivery network to the destination location when existing pipelines are not available, are not efficient to use or cannot ensure that the mail pieces arrives at the destination location at the delivery time or with minimum delay.

In one disclosed embodiment, the computer system is further configured to define one or more conditions regarding the physical characteristics of mail pieces and to automatically re-assign pieces to the further delivery pipeline and set the routing device when the defined conditions are met. The re-assign rules enable mail pieces in the delivery network to use selected or newly created delivery pipelines.

Another aspect of the mail routing system for routing mail pieces involves the visibility of the mail piece flows for each network station in the delivery network, of the pieces that will arrive at the network station and the pieces that should leave the network station within a time interval. Hence, in one embodiment, the computer system of the mail routing system is configured, for each network station, to display an inbound pipeline and an outbound pipeline associated with a delivery pipeline from at least one previous network station resp. a delivery pipeline to at least one successive network station.

In particular, the computer system is further configured to display an indicator for at least one of the inbound pipeline and the outbound pipeline of the network station for a set time interval, wherein the indicator is configured to distinguish between pieces registered as being placed on the inbound pipeline resp. the outbound pipeline for the time interval and pieces announced, following the consignment order, to be placed but not yet registered on the inbound pipeline resp. the outbound pipeline for the time interval. The indicator provides information for a planner about the level of certainty that a piece is actually on its way toward or from a network station such that capacity can be planned for the pipeline. Re-assignments of mail pieces to a further delivery pipeline due to measured weight and/or volume deviations are reflected by the indicator.

In one particular embodiment, the computer system is further configured to indicate at least one of the volume of each of the pieces, the aggregate volume of pieces, the weight of each of the pieces and the aggregate weight of the pieces for the inbound pipeline and the outbound pipeline. Said information is helpful for the planner when planning capacity for downstream pipelines.

In one disclosed embodiment, the predefined path segments are different for different delivery periods (e.g. different delivery days) and/or different delivery service levels for delivery of the consignment. The variation accounts for different criteria when calculating scheduled paths.

In one disclosed embodiment, wherein the computer system has access to historic information regarding physical characteristics of mail pieces obtained from the measurement system and wherein the computer system is further configured for selecting at least one of the first path segment and the first delivery pipeline for a mail piece on the basis of the historic information. Whereas the routing of a mail piece when being measured can normally not be adapted at the first network station when the actual physical characteristics of the mail piece becomes available within the available time interval, historic information may be used to preselect the first path segment and or the first delivery pipeline. For example, historic information on the physical characteristic may reveal that the day after a weekend, the mail pieces are usually bigger and more heavy than at other days of the week.

As will be appreciated by one skilled in the art, aspects of the present invention may be embodied as a system, method or computer program product. Accordingly, aspects of the present invention may take the form of an entirely hardware embodiment, a software embodiment (including firmware, resident software, micro-code, etc.) or an embodiment combining software and hardware aspects that may all generally be referred to herein as a "circuit," "module" or "system". Functions described in this disclosure may be implemented as an algorithm executed by a microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a solid-state drive, a random access memory (RAM), a non-volatile memory device, a read-only memory (ROM), an erasable programmable read-only memory (EPROM or Flash memory), an optical fibre, a portable compact disc read-only memory (CD-ROM), an optical storage device, a magnetic storage device, or any suitable combination of the foregoing. In the context of this disclosure, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless (using electromagnetic and/or optical radiation), wired, optical fibre, cable, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on a user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the functions noted in the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

It is noted that the invention relates to all possible combinations of features recited in the claims.

### BRIEF DESCRIPTION OF THE DRAWINGS

Aspects of the invention will be explained in greater detail by reference to exemplary embodiments shown in the drawings, in which:
FIG. 1 depicts a conventional delivery network comprising network stations defining service areas and a computer system connected to each of the network stations;
FIG. 2A is a schematic illustration of a mail routing system according to a disclosed embodiment of the invention in a delivery network for routing a mail piece from an origin address to a destination address;
FIG. 2B is a schematic illustration of a portion of a piece level table for mail pieces P1, P2 accessible for the computer system in the mail routing system of FIG. 2A.
FIG. 3 is a schematic illustration of a more complex delivery network through which routing is controlled using the mail routing system as depicted in FIG. 2A;
FIG. 4 is a more detailed illustration of a mail routing system containing registration devices generating registration evens along a scheduled route for a mail piece through a delivery network;;
FIG. 5 depicts a time chart illustrating registration evens along the scheduled route in the delivery network of FIG. 3;
FIGS. 6A and 6B are flow charts illustrating some steps in the method for routing mail pieces through a delivery network;
FIG. 7 is a schematic illustration of a measurement system and routing system for non-conveyable mail pieces;
FIGS. 8A and 8B respectively illustrate a measurement system and routing system for conveyable mail pieces;
FIG. 9 illustrates a user interface of the computer system indicating the pieces in the respective pipelines
FIGS. 10-12C illustrate user interfaces of a computer system enabling a user to manage the consignment flows;
FIG. 13 is a schematic block diagram of a general system, such as a computer system for managing consignment flows in a delivery network.

### DETAILED DESCRIPTION OF THE DRAWINGS

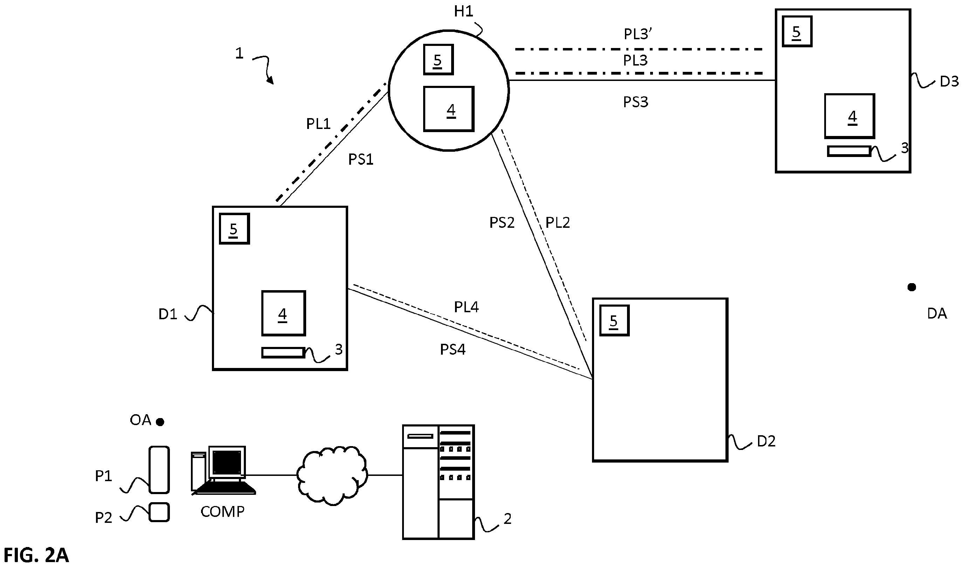

FIG. 2A is a schematic illustration of a delivery network 1 comprising a plurality of network stations H and D, designated as depots D1, D2 and D3 and a hub H1. It should be appreciated that delivery network 1 may be more complex and may comprise tens of hubs H and hundreds to thousands of depots D.

The delivery network 1 is operated by a delivery service provider. A service area SA (see FIG. 1) is assigned to each of the depots D. In FIG. 2A, the service area associated with depot D1 contains origin address OA and the service area associated with depot D3 contains delivery address DA for mail pieces P1 and P2. Mail pieces P1, P2 may be conveyable items and may be part of a single consignment. Pickup and delivery (PUD) vehicles of the service provider pickup mail pieces P1 and P2 at the origin address OA in the service area of depot D1 and deliver these mail pieces at the destination address DA in the service area of depot D2. Between the network stations, the pieces are conveyed using bigger trucks or other vehicles.

The service provider operates a mail piece routing system comprising a computer system 2, at least one measurement system 3 located at the depot D1, at least one routing device 4 and, optionally, a plurality of registration devices 5 at the network stations. Computer system 2 controls the operation of the routing system.

The computer system 2 of the delivery service provider is configured to receive a delivery order from a customer computer COMP to transport mail pieces P1, P2 from origin address OA to delivery address DA. The delivery order contains certain information on the delivery. The information is representative of at least the delivery address DA for pieces P1, P2. The delivery order may contain information regarding physical characteristics of each of the pieces P1, P2. Furthermore, the delivery order may contain the requested service (e.g. economy or express) The information may be entered using a web page provided by the delivery service provider or a third party system connected to the computer system 2 of the delivery service provider. The web page may provide fields wherein the customer may e.g. enter the weight and/or volume of each of the pieces.

Computer system 2 may comprise one or more computers (e.g. servers) and one or more databases that may be arranged in a distributed manner. Computer system 2 is in communicative connection with each of the network stations D, H in the delivery network 1 and may comprise similar modules as shown in FIG. 1. The connections between computer system 2 and the various systems and devices at the network stations through a communication network as shown in FIG. 1 are not shown in FIG. 2A for clarity reasons.

As shown in FIG. 2A, each of the network stations is connected to at least one other network station by at least one path segment PS, indicated by the solid lines in FIG. 1 by PS1, PS2, PS3 and PS4. The path segments PS indicate connections between network stations over which the delivery service provider transports mail pieces P1 and P2. The path segments PS are stored in computer system 2. As can be observed from FIG. 2A, path segments PS do not exist between all network stations H, D, i.e. computer system 2 does not store a path segment PS from each network station to each of the other network stations in the delivery network 1. Also, path segments PS4 and PS5 between depots D1 and D2 and between depots D2 and D3 may not regularly exist. By default, depots D are normally connected with each other via hubs H and not directly.

The delivery network 1 may not be stationary with respect to the path segments PS. For example, the path segments PS between the network stations of the delivery network 1 of FIG. 2A may be valid for a particular time interval, such as a day, a week, a month, a season etc. but be different for another time interval, e.g. another season.

Upon receipt of the delivery order at the computer system 2, the computer system 2 will calculate a scheduled path of path segments PS to deliver the pieces P1, P2 at the destination address DA. In FIG. 2A, the calculated scheduled path contains path segments PS1 and PS3.

Upon receipt of the delivery order, the information contained in the delivery order and/or information derived from the delivery order is stored in a database of computer system 2 (e.g. a consignment database as shown in computer system 100 of FIG. 1). The database stores a consignment table using an identifier, e.g. a consignment identifier. The consignment table contains, amongst others, piece identifiers of the pieces P1, P2 contained in the consignment C. Other information contained in the consignment tables include the service level, the transport mode (road, air), the origin address, the destination address, the first network station D1, the last network station 2, etc.

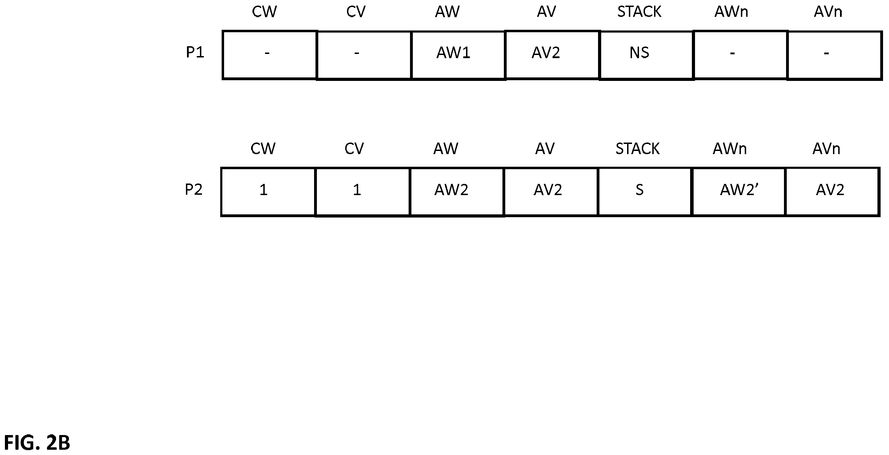

For each of the pieces P1, P2, the computer system 2 also contains a piece table identified by the piece identifier. The piece tables contain information associated with that single piece, e.g. the contractual (i.e. customer-provided) volume CV and/or weight CW of the piece, if entered. A portion of the piece level tables relating to the physical characteristics is shown in FIG. 2B. The entries in the table are left blank if the customer does not provide the information. In the example given in FIG. 2B, the entries are left blank (-) for mail piece P1 and arbitrary number "1" has been entered for mail piece P2.

The computer system 2 also stores a scheduled route SR for delivery of the consignment C (i.e. mail pieces P1, P2) through the delivery network 1. The scheduled route, as explained above, comprises predefined path segments PS1 and PS3. Path segment PS1 is a path segment outbound of the first network station D1 associated with the origin address OA. Path segment PS3 is a path segment outbound of the second network station H1. The same path segment PS3 is a path segment inbound to the third network station D3 associated with the delivery address DA.

Computer system 2 is configured to use, define or generate delivery pipelines PL on top of the path segments PS. Delivery pipelines PL are used to manage and monitor the flow of pieces through the delivery network 1. A pipeline PL represents scheduled mail pieces, i.e. mail pieces for which the computer system 2 has received a delivery order, on a path segment PS between two network stations in the delivery network within a set time interval. For example, if a consignment C contains two pieces P1, P2 that are scheduled to be picked up in the service area of depot D1 and to be delivered in service area of depot D2, existing delivery pipelines PL1 and PL3 are used or new pipelines PL1, PL3 are generated over the predefined path segments PS1 and PS3 in computer system 2 between depot D1 and hub H1 and between hub H1 and depot D3 as schematically shown by the dash-dotted lines in FIG. 2A. The selected pipelines may be influenced by the details of the consignment order, e.g. whether the transport mode is "air" or "road". From the generated pipelines PL1 and PL3, a delivery time for the pieces at the destination location will be calculated.

The disclosed system and method provide a dual-layer system comprising a scheduled route of path segments PS (first layer) over which delivery pipelines PS (second layer) are defined. Upon receipt of a delivery order, the scheduled route is determined from pre-defined path segments PS between the network stations. Each piece P1, P2 is assigned to a plurality of delivery pipelines PL between successive network stations on the scheduled route and a delivery time is associated with each piece of the consignment. A default time for traversing a delivery pipeline PL is associated with each piece P1, P2. The default time may be determined from the length of the path segment PS and the average speed with a particular transport vehicle that can be achieved for the path segment. The default time may be different for different time intervals (e.g. different days, seasons, etc.) and may be obtained from historic data or real time data.

The pipelines between successive network stations enable propagation of information to each of network stations along the scheduled route SR in the delivery network on the basis of the expected weight and volume on piece level. Accordingly, upon receipt of the delivery order, each of the network stations along the scheduled route may immediately be informed of the future required processing capacity. In the present example of FIG. 2A, network stations H1 and D3 are informed about the arrival of the pieces P1, P2, the associated times and the required capacity for transporting the pieces P1, P2 towards the destination address DA. The available capacity is determined by the effective maximum load (weight and volume) assigned to transport vehicles conveying the pieces between the network stations.

Pieces P1, P2 are picked up by a PUD vehicle and transported to network station D1 associated with the origin address. At pickup, pieces P1, P2 may be provided with a marking and registered by a mobile registration device (not shown). The customer at the origin address OA may also provide the marking himself.

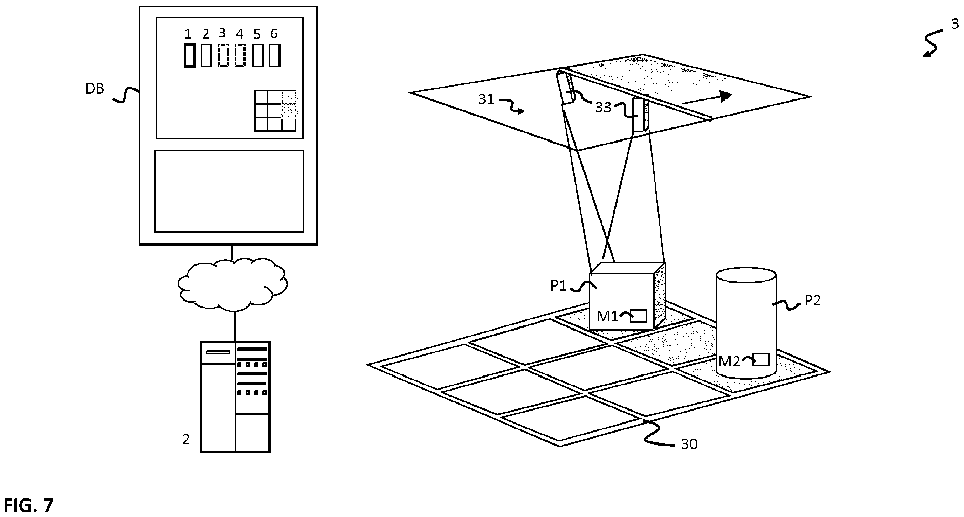

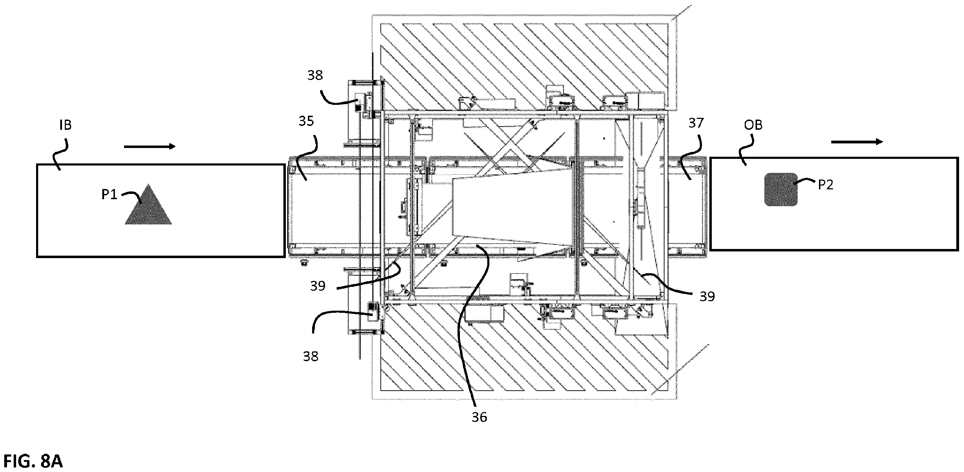

When pieces P1, P2 arrive at the first network station D1, the pieces P1, P2 are routed to the successive network station H1 using a routing device 4 upon registration of the registration mark applied to the pieces P1, P2 using registration device 5. Routing device 4 and registration device 5 may be combined into a single device. Embodiments of a routing device will be disclosed in further detail with reference to FIGS. 7 and 8A-8B.

Likewise, when pieces P1, P2 arrive at the network station H1, registration of the marking on pieces P1, P2 by registration device 5 triggers routing device 4 in network station H1 to route the pieces to the successive network station D2. Registration events R (not shown in FIG. 2A) triggered by registration devices 5 along the path segments update the information associated with the pipelines PL1, PL2 to monitor progress of the transport and to signal possible delays in the transport of each of the pieces.

According to the present disclosure, upon arrival of the pieces P1, P2 at the first network station D1, the physical characteristics of each of the pieces P1, P2 are measured using measurement system 3. In one example, the measurement entails measuring the volume and weight and a determination of the stack ability (e.g. by determining the shape of the mail pieces). Measurement system 3 may comprise a weighing device and one or more optical systems (e.g. using lasers, detectors and/or cameras) or ultrasonic systems to accurately estimate the volume of each of the pieces P1, P2. Embodiments of a measurement system 3 will be disclosed in further detail with reference to FIGS. 7 and 8A-8B.

The measurement process of the physical characteristics of the mail pieces causes the entries of the piece level tables to be filled with the actual measurement information. In FIG. 2B, it is shown that for mail piece P1, the actual weight AW is determined to be "AW1" and the actual volume is determined to be "AV1". Likewise, the actual weight AW and actual volume for mail piece P2 are determined to be "AW2" and "AV2". While the delivery order may contain information regarding the stack ability of the mail piece, in the present example, this information STACK is only obtained when performing the measurements. Mail piece P1 is determined to be non-stackable "NS", wherein mail piece P2 is determined to be stackable "S".

Computer system 2 determines on the basis of the contents of the fields AW, AV and STACK whether or not the initially assigned delivery pipelines PL1, P3 can be maintained or that a reassignment should be performed at the network station H1. In the present example, it may be that the actual volume AV1 and the non-stackability NS of mail piece P1 result in a reassignment of mail piece P1 to a delivery pipeline different from the delivery pipeline PL3 since the initially planned transport capacity is not sufficient. On the other hand, the delivery pipelines PL1 and PL3 for mail piece P2, after the physical characteristics have been measured, are maintained.

In one example, mail piece P1 is reassigned to a different delivery pipeline PL3' defined over the same path segment PS3. Such a further delivery pipeline may e.g. comprise a different transport mode (road instead of air) or a different service level (economy instead of express). In another example, mail piece P1 is reassigned to a different delivery pipeline PL2 defined of a new path segment PS2 as shown in FIG. 2A. In the latter example, the mail piece P1 is planned to be transported to network station D2 instead of network station D3.

In any case, the reassignment of mail piece P1 to a different delivery pipeline due to the contents of the fields in the piece level table relating to the measured physical characteristic(s), affects the routing in the second network station H1. In the above examples, the routing device 4 should be set such that mail piece P1 is transported in accordance with the reassigned delivery pipeline PL3' and/or PL2. It should be appreciated that routing involves an internal and automatic operation by routing devices 4 at a network station, wherein incoming pieces are automatically routed to certain locations within the network stations where the piece(s) are loaded into a transport vehicle assigned to the path segment PS. This aspect will be discussed in further detail with reference to FIGS. 7 and 8A-8B.

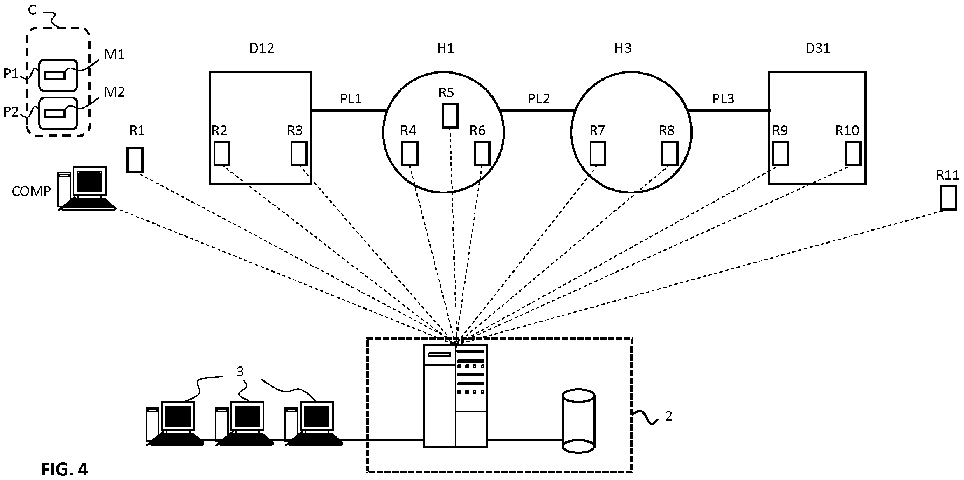

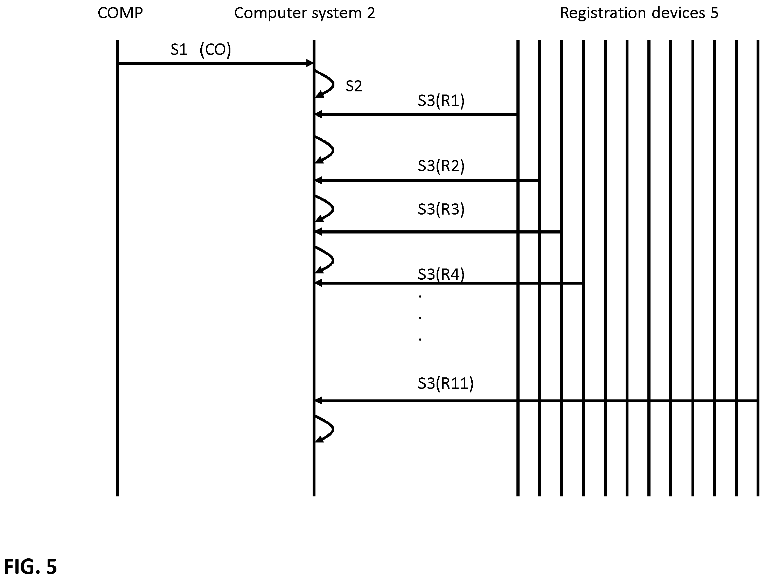

During the routing or re-routing of the piece(s) along the further path segments, registration devices 5 register the pieces to analyse whether the delivery time can still be met as discussed with reference to FIGS. 4 and 5. If not, computer system 2 may reset the routing settings of routing devices 4 in one or more downstream network stations.

The computer system may be configured to trigger reassignment of the mail piece P1 to the further delivery pipeline PL3'or PL2 when a difference is detected between the contractual entries CW and CV and the corresponding actual entries AW and AV and, optionally, for setting the routing device 4 to route the mail piece to the outbound port associated with the further delivery pipeline. The difference may be associated with characteristic deviation threshold for each of the characteristics. The embodiment facilitates automatic calculations of path segments, assignment to delivery pipelines and/or routing.

The above-identified routing also affects the planning for subsequent network stations, such as network station D3 (if the mail piece P1 is reassigned to delivery pipeline PL3') or of networks stations D3 and D2 (if the mail piece P1 is reassigned to delivery pipeline PL2). For example, mail piece P1 may arrive earlier or later in network station D3 or may arrive in network station D2 and not at all in D3. In the latter The concept of the delivery pipelines ensures propagation of this information to each of the relevant downstream network stations.

The reassignment of the delivery pipeline may also affect the PUD rounds driven from each of these network stations D3, D2 to finally deliver the mail piece P1 at the destination address DA.

Not all network stations should be provided with a measurement system 3 or apply a measurement system 3 when a mail piece is received via another network station. For example, if mail piece P1 is routed to network station D2, the physical characteristics of mail piece P1 do not have to be measured again in network station D2. As shown in FIG. 2B, the entries AWn and AVn corresponding to the weight and volume measured in network station n are left blank (-).

The present disclosure only provides for a measurement system for measuring physical characteristics of mail pieces at the network station where the mail piece enters the delivery network. It may be beneficial, however, that subsequent network stations also perform measurements for at least one of the physical characteristics of a mail piece. For example, for mail piece P2, routed via network station H1 to network station D3 in FIG. 2A, an additional measurement of weight and volume in network station D3 may result in a determination that the actual weight AWn in network station D3 has decreased from AW2 to AW2' as shown in FIG. 2B. Detection of the decrease in weight may indicate leakage or theft of a portion of the mail piece P2 and may trigger routing in network station D3 to a particular location where the mail piece P2 is checked.

It is noted that the computer system 2 may have access to historic information regarding physical characteristics of mail pieces obtained from the measurement system and that the computer system 2 is further configured for selecting at least one of the first path segment PS1 and the first delivery pipeline PL1 for a mail piece on the basis of the historic information. Whereas the routing of a mail piece when being measured can normally not be adapted at the first network station D1 when the actual physical characteristics of the mail piece become available within the available time interval, historic information may be used to preselect the first path segment PS1 and/or the first delivery pipeline PL1. For example, historic information on the physical characteristic may reveal that the day after a weekend, the mail pieces are usually bigger and more heavy than at other days of the week. As a consequence, the delivery service provider may arrange for more or bigger trucks when planning capacity for transport of mail pieces from D1 to H1 for such days. Also, for such days, computer system 2 may determine that an additional path segment PS4 and corresponding delivery pipeline PL4 prove to be efficient.

The detection of the deviation between the actual weight/volume from the weight/volume of a piece in the delivery order may trigger the computer system 2 to re-calculate the scheduled route for such a piece. One occurrence is the existence of weight restrictions on the original scheduled route. It should be appreciated that path segments PS between network stations may not always exist, i.e. no transport vehicles would normally run between these network station. E.g. depots D1 and D2 may normally not be connected by a path segment PS4. Furthermore, if a path segment exists or is (temporarily) generated, transport capacity is associated with the path segment.

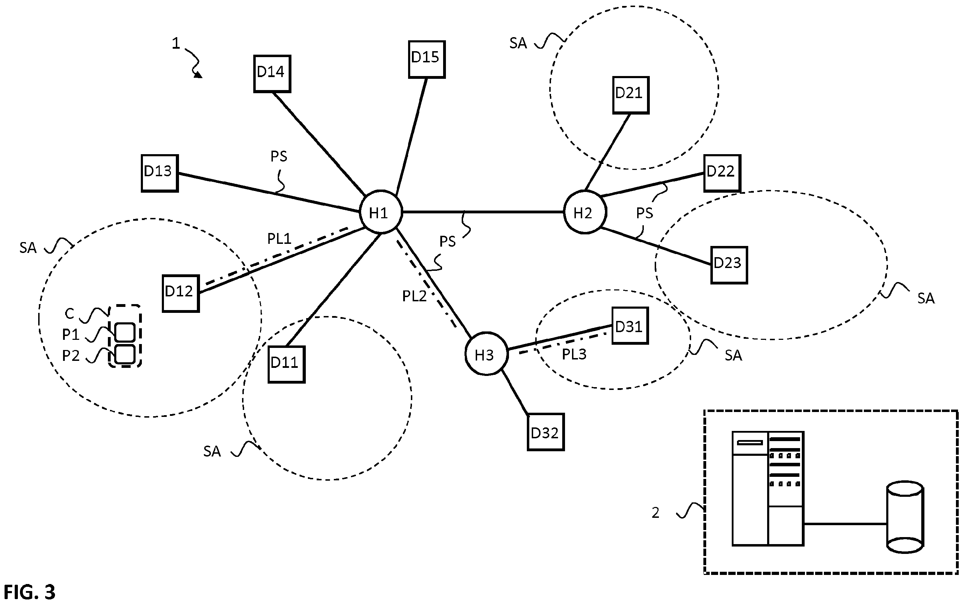

FIG. 3 is a schematic illustration of a more complex delivery network 1 comprising a plurality of network stations H and D, designated as hubs H1, H2 and H3 and depots D11-D15, D21-D23 and D31-D32. Hub H1 is a common hub for depots D11-D15; hub H2 is a common hub for depots D21-D23 and hub H3 is a common hub for depots D31-D32. It should be appreciated that delivery network 1 may be more complicated and may comprise tens of hubs H and hundreds to thousands of depots D. Delivery network 1 may span a country, a continent or the entire world.

The delivery network 1 is operated by a delivery service provider. A service area SA is assigned to each of the depots D. Some of the service areas SA are shown in FIG. 3 by dashed circles and ovals. Service areas SA comprise source locations (associated with origin addresses OA) and/or destination locations (associated with delivery addresses DA) where clients of the delivery service provider are located. Pickup and delivery (PUD) vehicles of the service provider pickup and deliver consignments C at the source locations resp. destination locations.

Again, as shown in FIG. 3, each of the network stations is connected to at least one other network station by at least one path segment, indicated by the solid lines in FIG. 1 of which some are indicated by PS. The path segments PS indicate connections between network stations over which the delivery service provider may potentially carry consignments C. The path segments PS are stored in computer system 2.

Computer system 2 is configured to use or generate delivery pipelines PL on top of the path segments PS. In FIG. 3, for example, if a consignment C contains two pieces P1, P2 that are scheduled to be picked up in service area SA of depot D12 and to be delivered in service area SA of depot D31, delivery pipelines PL1-PL3 are used or generated over the predefined path segments PS in computer system 2 between depot D12 and hub H1, between hub H1 and hub H3 and between hub H3 and depot D31 as schematically shown by the dash-dotted lines in FIG. 3. The selected pipelines may be influenced by the details of the consignment order, e.g. whether the transport mode is "air" or "road". A pipeline PL will not be generated between network stations H2 and D31 since these network stations are not connected by a predefined path segment PS. From the generated pipelines PL1-PL3, a delivery time for the pieces at the destination location will be calculated.

Each network station in FIG. 3 contains a measurement system 3 and a routing device 4 as shown in FIG. 2A.

Upon receipt of the consignment order, the consignment C is stored in a consignment database of computer system 2. The piece tables contain information associated with that single piece, including the customer-provided volume and/or weight of the piece and the actual route of the piece.

The computer system 2 also stores a scheduled route SR for delivery of the consignment C through the delivery network 1. The scheduled route, as explained above, comprises predefined path segments PS between network stations D12-H1, H1-H3 and H3-D31. Again, when mail pieces P1, P2 arrive at the first network station D12 associated with the origin address in the service area thereof, the physical characteristics of the mail pieces are determined and may affect the routing in one or more of the downstream network stations H1, H3 or any other network station.

Routing and re-routing may affect the delivery time of the mail piece. FIG. 4 is a schematic illustration of registration events R1-R11 triggered by registering the pieces P1, P2 on their way along network stations D12, H1, H3 and D31 wherein pieces P1, P2 have been assigned to delivery pipelines PL1, PL2, PL3 between the network stations. Delivery pipeline PL1 is an outbound pipeline for network station D12 and an inbound pipeline for network station H1. Delivery pipeline PL2 is an outbound pipeline for network station H1 and an inbound pipeline for network station H3. Delivery pipeline PL3 is an outbound pipeline for network station H3 and an inbound pipeline for network station D31. Upon receipt of the delivery order, also referred to as consignment order CO, see FIG. 5, the first and last network station and the scheduled route between the first and last network station is determined. Further, the pieces P1, P2 are associated with delivery pipelines PL1, PL2 and PL3 between the network stations in the scheduled route.

FIG. 5 is a time diagram illustrating processing of registration events at the computer system 2.

In step S1, shown in FIG. 5, a consignment order CO is received from computer COMP, see FIG. 4, at computer system 2 for delivery of pieces P1, P2 of a consignment C from a source location to a destination location through the delivery network 1. The consignment order contains information, possibly blank, about the weight and volume of each of the pieces P1, P2.

In step S2, the consignment order CO is processed by computer system 2. The computer system 2 determines the first network station D12 on the basis of the location of the source location, i.e. the origin address, assigned to the service area SA of network station D12. Furthermore, the computer system 2 determines the last network station D31 in the delivery network 1 on the basis of the location of the destination location, i.e. the destination address, assigned to the service area SA of network station 31.

Processing of the consignment order CO may involve calculating a scheduled route SR through the delivery network 1. The scheduled route SR is calculated from path segments PS stored in computer system 2 as predefined for the relevant time interval as described above.

As mentioned above, delivery pipelines PL may exist or be generated between successive network stations. The processing step S2 may involve assigning pieces P1, P2 to pipelines PL. In the example depicted in FIG. 3, pieces P1, P2 are assigned to pipelines PL1-PL3.

Computer devices 3 connected to computer system 2 may monitor pipelines for each of the network stations. In the example, pieces P1, P2 will be shown on each of the inbound pipelines PL of network stations D12, H1, H3 and D31 once the pieces P1, P2 have been assigned to these pipelines.

The pieces P1, P2 contain registration marks M1, M2, see FIG. 4, e.g. bar codes or two-dimensional codes, that may be registered (e.g. scanned) along the route through the delivery network 1 by registration devices. Registration results in registration events R being received at computer system 2, as shown in step S3 in FIG. 5. The registration events R may take the form of a message, wherein the message contains the piece identifier read from or determined from the registration mark M1, M2 or contain information from which the piece identifier can be derived by the computer system 2. The message also contains a location identifier (and possible a registration time) indicative of where (when) the piece is registered.

For example, when consignment C is picked up by a PUD vehicle at the source location, pieces P1, P2 are scanned resulting in registration event R1 for each of the pieces P1, P2 received by computer system 2. Except when a service area SA contains a high volume customer, an inbound delivery pipeline does not exist from the service area SA to the depot D12. However, the registration event R1 may be used to inform the computer system 2 that pieces P1, P2 were picked up and enable computer system to update the status of one or more of the delivery pipelines PL1-PL3.

When the PUD vehicle arrives at depot D12, the pieces P1, P2 are registered again and computer system 2 is informed of the arrival by registration event R2. Registration event R2 may also be the first time that the pieces P1, P2 are registered and are associated with delivery pipelines PL1-PL3. Similarly, when the pieces P1, P2 leave the depot D12, e.g. using a line haul truck, pieces P1, P2 are registered resulting in a registration events R3 received by computer system 2. Upon arrival of the pieces P1, P2, at hub H1, the pieces get registered resulting in registration events R4 for each of the pieces P1, P2. During handling of the pieces P1, P2 in the hub H1, further registrations may be performed resulting in one or more further registration events R5 received by the computer system 2. One handling action may comprise temporary storage in a warehouse location or placement of the piece on a conveyor belt in the hub H1. Once the pieces P1, P2 leave hub H1 on their way to hub H3, registration events R6 are received at computer system 2 for each of the pieces P1, P2. Successive registration events R7-R11 may be triggered by further registrations of the registration marks of each of the pieces in the delivery network. Upon delivery of the pieces P1, P2, a final registration is made resulting in registration event R11. Whereas pieces P1, P2 are not associated with an outbound pipeline from depot D31 to the destination address, registration event R11 may result in deleting the consignment from computer system 2.

It should be appreciated that traversal of the pieces P1, P2 through the delivery network 1 may trigger more of fewer registration events R than described in this example.

In one embodiment, the pieces P1, P2 follow the calculated scheduled route as described above. However, if piece P1 is, for some reason (e.g. as a result of routing along a different path due to measurement of a physical characteristic as described with reference to FIG. 2A), transferred from hub H1 to hub H2 (instead of hub H3), a registration event at hub H2 would produce a different route. Deviations may be monitored as part of the process of monitoring the consignment flows in the delivery network 1. Such deviations may trigger a planner at computer system 2 to take corrective actions. Corrective action may also be taken without detecting a deviation from a scheduled route SR, e.g. when capacity demands on a particular path segment change when the pieces are in a pipeline on a preceding path segment.

The registration events R2-R10 also result in updating the pipeline information. One aspect of the pipeline information involves the timing in order to monitor whether the delivery time for the pieces at the destination location can be met. Each pipeline is associated with a default time to convey pieces from one network station to another and hence, each piece is associated with such a default time (and date, if necessary).

Each piece P1, P2 has a default date and time on which it should arrive and depart from a particular network station up to the delivery location. The time of each registration event R2-R10 is measured against these times to determine whether the delivery time can be met. If the delivery time cannot be met, an alert may be generated for each piece for all successive network stations attracting the attention of the planner to see whether corrective action is required. The alert disappears automatically when successive registration events R2-R10 indicate that the delivery time can be met again for the piece (e.g. due to an action of the planner).

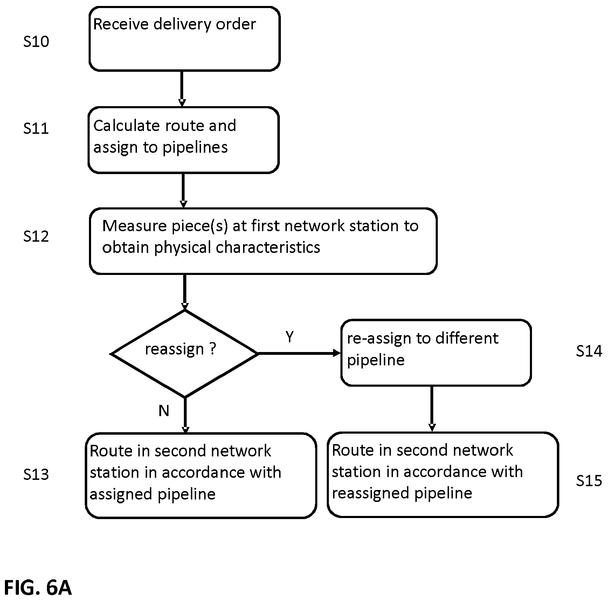

FIG. 6A is a flow chart illustrating some steps according to a disclosed method for routing mail pieces through a delivery network. The method for routing mail pieces involves a delivery network a first network station, a second network station located downstream of the first network station and a third network station located downstream of the second network station. It should be noted that the delivery network may comprise multiple second network stations. For example, in FIG. 3, the second network station may be network station H1 or H3, when the mail pieces are routed initially along the route D12-H1-H3-D31.

Step S10 involves receiving a delivery order at a computer system, the delivery order comprising information indicative of an origin address associated with the first network station, a destination address associated with the third network station, and physical characteristics of the mail piece.

Step S11 involves calculating at the computer system, a scheduled path for delivery of the mail piece upon receipt of the delivery order, wherein the scheduled path is defined from successive path segments between network stations in the delivery network from the first network station, via at least the second network station to the third network station, the path segments including a first path segment outbound from the first network station, a second path segment outbound from the second network station and a third path segment inbound to the third network station. Step S11 also comprises assigning the mail piece to a plurality of delivery pipelines between the first network station and the third network station, the plurality of delivery pipelines comprising at least a first delivery pipeline outbound from the first network station and defined over the first path segment, a second delivery pipeline outbound from the second network station and defined over the second path segment and a third delivery pipeline inbound to the third network station and defined over the third path segment, wherein the plurality of assigned delivery pipelines relate to a delivery time for delivery of the mail piece at the delivery address.

Step S12 involves measuring the physical characteristics of the mail piece by a measurement system at the first network station, e.g. network station D12 in FIG. 3.

Then, once the physical characteristics have been measured, the decision is taken whether the mail piece should be reassigned to at least one further delivery pipeline, different from the second delivery pipeline, outbound from the second network station on the basis of one or more of the measured physical characteristics. The physical characteristics may turn out to be such that the originally planned route and/or pipeline cannot be maintained. If this is not the case, the mail piece is routed in step S13 along the route and pipeline determined in step S11. If this is the case, step S14 involves reassigning the mail piece to a different pipeline and step S15 involves routing the mail piece in accordance with the reassigned pipeline.

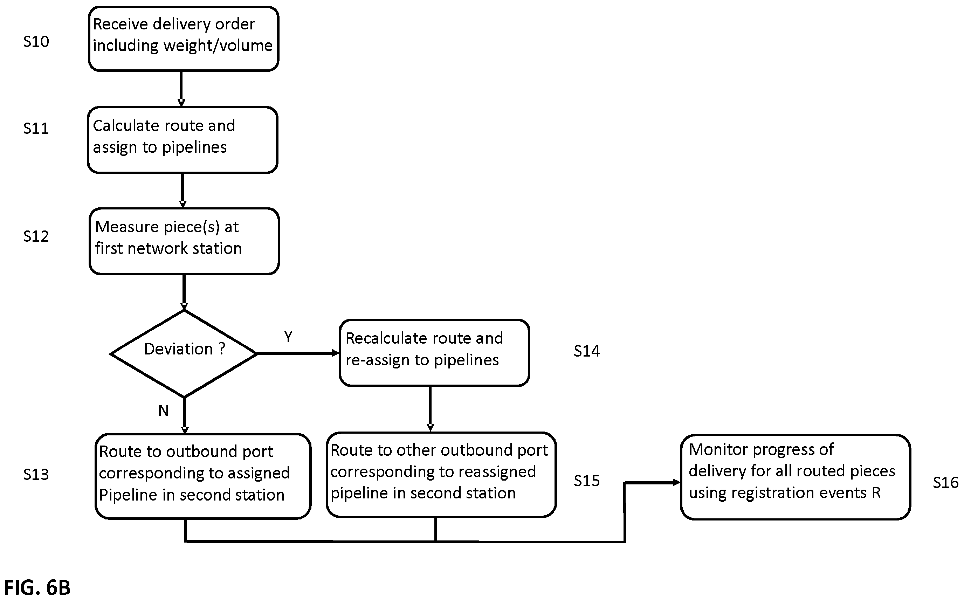

As mentioned with respect to FIG. 2A, it may be detected at network station D12 that the weight and/or volume of one or both mail pieces P1, P2, the actual entries in FIG. 2B, deviates significantly from the weight resp. the volume indicated in the delivery order CO, i.e. the contractual entries in FIG. 2B. Such steps will be described next with reference to FIG. 6B. The delivery network of FIG. 3 will be used to illustrate the steps of the method according to an embodiment.

In step S10, a delivery order is received at the computer system 2 including the weight and volume of mail pieces P1 and P2. In response to receiving the delivery order, the computer system 2 calculates the route wherein network station D12 is fixed as the first network station as a result of the origin address being located in the service area SA of this network station. Further, network station D31 is fixed as the network station from which the mail pieces are to be distributed on the basis of the delivery address contained in the delivery order. The calculated route is determined to contain path segments from D12 to H1, from H1 to H3 and from H3 to D31. Subsequently, the mail pieces are assigned to the associated pipelines PL1-PL3 as discussed above.

In step S12, mail pieces P1 and P2 are weighed and the volume of each piece P1, P2 is determined. If the weight and volume correspond approximately to the weight and volume indicated in the delivery order, the mail pieces P1 and P2 are routed to the outbound port of network station D12 corresponding to the path segment PS towards network station H1. This is shown in step S13.

If the weight and/or volume deviate significantly (wherein the significance may e.g. be determined using a certain weight margin and volume margin) from the weight and volume indicated in the delivery order, another pipeline may need to be assigned and, possibly, the route for the mail piece(s) may be recalculated (step S14). This may be necessary if it is determined that transport capacity is not available on one or more path segments of the scheduled route that was calculated in step S12. For example, transport capacity may be lacking on the path segment between hubs H1 and H3 of from hub H3 to depot D31. The recalculated path segments may then include the path segment between hub H1 and H2 and the path segment between hub H2 and depot D23. The mail piece(s) is also re-assigned to pipelines associated with the new path segments in step S13.

In step S14, computer system 2 changes the settings of the routing device 4 (not shown in FIG. 3) to route the mail piece(s) to an outward port corresponding to the path segment between hub H1 and hub H2 (instead of the outbound port corresponding to the path segment between hub H1 and hub H3). The routing device in hub H3 does no longer contain routing information associated with the mail piece(s). The routing device in hub H2 is configured with new routing information indicating that the mail piece(s) are to be routed to the outbound port corresponding to the path segment between hub H2 and network station D23.

Progress of the mail piece(s), either routed as in step S13 or re-routed as in step S15, is monitored through registration events as shown by step S16.

The mail piece(s) with deviating weight and/or volume measures may now by transported to the destination address from depot D23 in a PUD round temporarily leaving the service area SA of D23.

Planners may affect the routing of consignments (or pieces thereof). In particular, the management involves one or more of the following aspects:
- view inbound and/or outbound pipelines for each of the network stations D, H;
- change the routing of consignments C or pieces P1, P2;
- check other routing options;
- change the pipeline PL to which a consignment C or piece P is assigned;
- move consignment C or piece P to warehouse locations;
- provide loading and/or handling instructions to devices of workers and/or sorting instructions to (automatic) sorters.

The actions listed above enable a user of the computer system 2 to monitor and/or influence delivery of pieces through a delivery network. Selection of an alternative outbound delivery pipeline PL for a piece P1, P2 may e.g. result in the piece P1, P2 being conveyed to another network station D, H and/or using another transport mode (e.g. air instead of road) in order to be able to still reach the destination location within the delivery time, to reduce delay as much as possible and/or to optimize the use of available resources (e.g. transport capacity) in the delivery network. Furthermore, the subsequent network station and other downstream network stations are immediately informed on the new expected arrival of the piece. Similarly, mail pieces P may be delayed by temporarily assigning pieces to a warehouse and to use freed capacity for more urgent deliveries.

FIG. 7 is a schematic illustration of a measurement system 3 for non-conveyable mail pieces P.

The measurement system 3 comprises a weight measurement system 30 and volume measurement system 31. The weight measurement system 30 measures a weight of a mail piece P using e.g. weight measuring means located on a surface. In particular, weight measurement system 30 comprises a plurality of electronic scales 32. The electronic scales are integrated in the floor of a depot such that the surface of the floor matches the top surface of the scales. This way, forklift vehicles can mount and demount consignments in a very fast and efficient manner. Moreover, the plurality of scales (the matrix of scales) under the volume scanning system can be controlled such that one or more of the scales of the plurality of scales forms a scale for a consignments of a particular size. Hence, the plurality of scales can be configured into different scales of different sizes. This way scanning processes of different consignments can be processed in parallel.

The volume measurement system 31 comprise optical means (e.g. a cameras mounted to a frame on a ceiling) and outputs a volume or data from which a volume can be determined or estimated. In particular, the volume measurement system 31 comprises a number of movable camera's 33 mounted on a scanning system enabling movement of the camera's to different x,y positions in a plane parallel to the top surface of the scale.

The measurement system 3 is connected to computer system 2 for controlling the measurement process and a measurement dashboard DB, e.g. one or more large displays mounted close to the measurement system 3, a display in the forklift truck, a mobile phone or another graphical user interface such as a head-mounted display.

During the measurement process, the dashboard DB informs a forklift driver about the status of the measurement. Furthermore, the dashboard DB displays scanned information, e.g. weight and volume, and routing information. Once the measurement process is finished the data may be stored in a database of computer system 2 and used for routing as explained with reference to FIGS. 6A and 6B in downstream network stations.

In FIG. 7, when camera's and/or lasers and/or ultra sound devices 33 scan the mail piece P1, also marking M1 is registered. Registering marking M1 may be used for starting the measurement process in order to link the measurement data to the appropriate mail piece. In the case of FIG. 7, the dashboard DB1 informs forklift truck driver that mail piece P1 should be transported to dock 1 corresponding e.g. to transport to hub H1. In subsequent network stations, e.g. network station H1, the dashboard DB may inform the truck driver of the routing for the mail piece in this manner according to the present disclosure.

FIG. 8A is a schematic illustration of a measurement system 3 for conveyable mail pieces P1, P2, i.e. mail pieces that can be transported over conveyor belts within the network station.

Measurement system 3 is located between an in-belt IB and an out-belt OB and comprises an in-feeder belt 35, a scale belt 36 and an outfeeder belt 37. Weight measurement is performed on scale belt 36 and may comprise a short stop of the scale belt 36. Markings are registered using a camera-based identification system 38 enabling reading markings from e.g. five sides (four sides, one top). Volume measurement is performed using lasers 39 and mirrors enabling providing dimensioning data for both cuboid and non-cuboid objects. Software is used, e.g. in computer system 2, to calculate a three-dimensional volume shape of the mail piece as the smallest enclosing rectangular box in real time and may also be used to determine stack ability of the mail piece. A control system may be provided to ensure that mail pieces are fed into the measurement system with the correct gaps in between to allow appropriate measurement of the weight and volume.

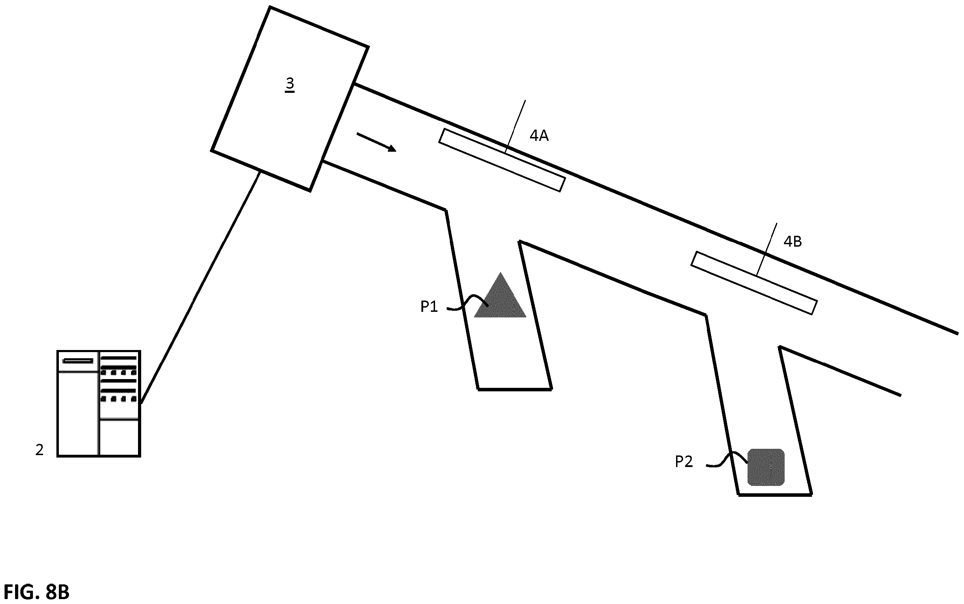

FIG. 8B is a schematic illustration of a routing system 4 at a second network station (e.g. network station H1 in FIG. 2A or FIG. 3) under the control of computer system 2 communicatively connected to the network station. Routing system 4 comprises a first routing device 4A and a second routing device 4B that can be set from computer system 2. Routing devices 4A, 4B move mail pieces P1, P2 to different outbound ports of the network station in accordance with routing settings as obtained from computer system 2. For example, if measurement system 3 at a previous network station measures that mail piece P1 is too big and/or non-stackable to be conveyed over the initially determined path, computer system 2 may set routing device 4A to direct mail piece P1 to outbound port 1 instead to outbound port 2 such that mail piece P1 is transported over a different path or is assigned to a different pipeline as would be the case if the volume of mail piece P1 would be less voluminous and stackable. It should be noted that routing system 4 may have integrated a measurement system 3 as shown in FIG. 8B for subsequent network stations.

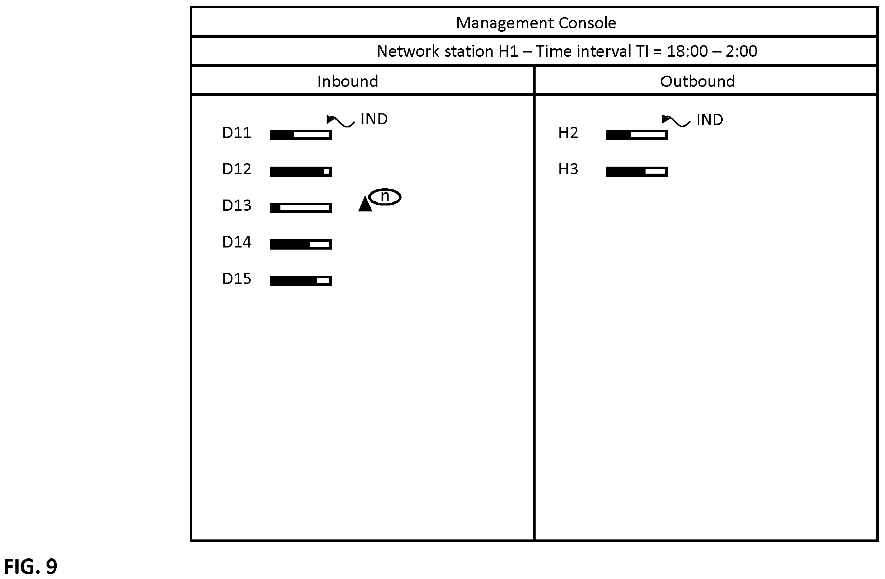

FIGS. 9-12C illustrate various examples of consignment flow management using user interfaces on computers of computer system 2.

The user interface of FIG. 9 illustrates a view of the inbound delivery pipelines and outbound delivery pipelines from the network station H1. The user interface provides visibility of the flows for network station H1 in the delivery network 1, of the pieces that are scheduled to arrive at the network station from network stations D11-D15 and the pieces that are scheduled to leave the network station H1 to network stations H2, H3 within an operational time interval TI, set here between 18:00 and 2:00 the next day. The operational time interval TI may be adjusted by a user for the currently selected network station. It should be noted that the screen may contain multiple pipelines PL between two network stations, e.g. a road pipeline and an air pipeline between H1 and H2.

It should be noted that the delivery network 1 is a bidirectional network, i.e. pieces may also be conveyed from e.g. hub H3 to hub H1 or from hub H1 to depot D12. Hence, the user interface of FIG. 1 may display, in this example, H3 also as an inbound pipeline and D12 also as an outbound pipeline.

The screen may be refreshed upon request by the user and/or may be refreshed automatically to ensure that the latest information on the pipelines is displayed.

The user may, if authorized, select another network station than network station H1, e.g. network station H2 or network station D31. Once the user has selected a network station, he may execute planning activities for that network station.

As shown in FIG. 9, the computer system 2 is further configured to display an indicator IND for each of the inbound pipelines and the outbound pipelines of the network station H1 for the set time interval TI. It should be noted that the indicator IN may have a shape other than a bar.

The indicator IND indicates 100% of the scheduled pieces on the associated pipeline, e.g. on the basis of the volume of the pieces. The indicator IND distinguishes between pieces P1, P2 confirmed to have been placed on the inbound pipeline resp. the outbound pipeline for the time interval TI (black part of indicator IND, confirmed, e.g. on the basis of a registration event R) and pieces scheduled on the pipeline, following the delivery order, but not yet registered for that pipeline (indicated by the blank part of the indicator IND, unconfirmed) for the time interval TI. The indicator IND provides information for a user about the level of certainty that a piece is actually on its way toward or from a network station such that capacity can be planned for the pipeline.

For example, the screen in FIG. 9 shows that, at a particular point in time, about 90% of the scheduled pieces on the inbound pipeline PL1 from D12 has been registered (i.e. confirmed) and is on its way to the network station H1. Such registration e.g. results from registration event R3 in FIG. 5 which may be combined with the measurement of the physical characteristics. If the screen for network station H3 would be displayed, the same pieces would be indicated by the IND but would be part of the unconfirmed part of the indicator IND since no registration event were received yet for the pipeline PL2 between H1 and H3. The other 10% of the scheduled pieces of the consignment of indicator IND indicates that a consignment order has been received for these pieces but a registration event has not yet occurred.

As soon as a piece arrives at network station H1, registered e.g. by registration event R4 in FIG. 5, the piece is removed from the pipeline PL1 and the pipeline indicator IND for the pipeline PL1 between network stations D12 and H1 will no longer include the piece. Once the piece is registered to leave the network station H1, this is indicated in the confirmed part of the indicator IND for the outbound pipeline PL2 between network station H1 and network station H3. If a mail piece is routed differently, e.g. because of the physical characteristics measured at some network station, this information is reflected in the pipeline.

For each of the pipelines, an alert indicator may be shown on the screen, indicating that n pieces in the pipeline may not reach the delivery time at the destination location without corrective action from the user. This is shown in FIG. 9 by the black triangle, together with the number n of pieces for which an alert is generated by the computer system 2.

The screen in FIG. 9 may show further information, such as the transport mode of the pipeline (air, road) and the total actual volume in kg.

In the example discussed with reference to FIGS. 3-6, if mail piece P1 would be rerouted to hub H2 instead of H3, this would be visible in the outbound indicators H2 and H3 in FIG. 9.

Warehouse locations may be used by users of the computer system 2 to store pieces and may be used on both the left inbound side and right outbound side of the screen. The user can allocate pieces to a warehouse location, e.g. if the weight and/or volume of the mail piece cannot be accommodated in the available transport capacity.

The computer system 2 enables a user to gain valuable information on piece level. When the user clicks on a dedicated tool button (not shown) in the user interface, the user may search for a consignment C and show details and whereabouts of all the pieces in the consignment C. To initiate a search, the user is provided with a search window shown on top of the active screen wherein he can enter a consignment number and commit the search.

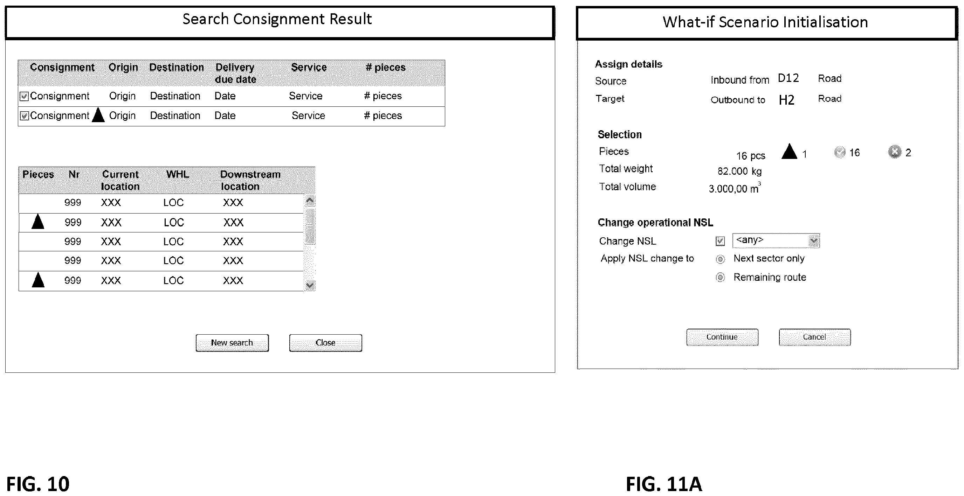

The search results for the pieces found are not necessarily restricted to single network station of the delivery network. This is shown in FIG. 10, where XXX may be any network station in the delivery network 1. For example, for consignment C containing pieces P1, P2 as mentioned above, a search for consignment C may result in a finding the P1 is at network station H1 and piece P2 is at network station H2.

The computer system 2 may return more than one search result based on a single consignment number when identical numbers are used for consignments. As shown in FIG. 10, the computer system 2 may display a table with search results based on the consignment number. When the user clicks one of the rows, the computer system 2 highlights the row and shows the piece table for the row that the user selected.

As also shown in FIG. 10, one or more alerts, indicated by the black triangles, may be visible for the consignments and/or for the pieces within the consignment. Accordingly, a user can view on piece level which of the pieces of the consignment requires corrective action. In the example above, an alert may be shown for the piece P1 that stayed in a warehouse of hub H1.

Alerts may be shown together on an alert dashboard (not shown in the drawings) generated when clicking on an alert indicator. The alert dashboard shows all alerts for inbound pipelines, warehouse locations and outbound pipelines for a current network station during the operational time interval TI. Alerts for specific inbound and/or outbound pipelines may also be shown individually.

In order to conduct a corrective action, a user may select a consignment and/or a piece and drag and drop the consignment or piece to a target location, such as another pipeline and/or a warehouse location, e.g. if the weight and/or volume deviates from the weight/volume indicated in the delivery order or simply on the basis of the actually measured weight/volume. By doing so, the user changes the routing of the consignment and/or pieces through the delivery network 1. This may have caused piece P1 to eventually arrive at hub H2 instead of hub H3. As a result, handling devices in the delivery network 1 are updated with the new routing instructions. For example, the internal handling, such as automated sorting, in hub H1 results in placing the piece P1 on a transport vehicle towards hub H2 and has placed piece P1 on a pipeline from H1 to H2 in the computer system 2.

In one embodiment, before effecting the changes in the routing, the computer system 2 may initiate a what-if scenario analysis. The what-if scenario enables a user at the computer system 2 to determine the result of the corrective action prior to the actual implementation. The user may e.g. determine whether the delivery time for the piece can be met when the change would be made. The embodiment enables calculation of the effect of the action prior to executing an action.

The what-if scenario analysis may comprise one or more steps.

First, the user may have selected the consignment and initiated the what-if scenario by dragging and dropping the consignment to a new destination (pipeline). For example, a user may have dragged a consignment C or a piece P1 to a pipeline from H1 to H2 instead of H3.

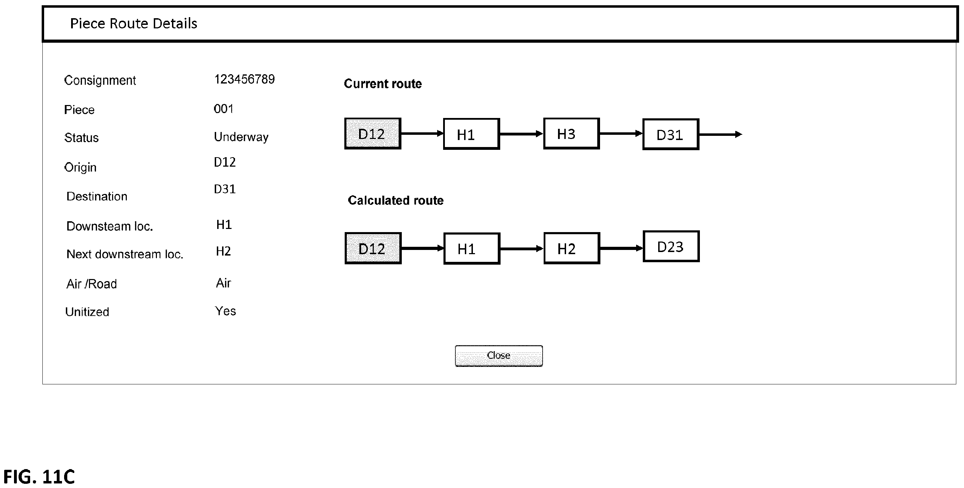

When the what-if scenario is executed, first an initialisation screen is displayed to the user from computer system 2, as shown in FIG. 11A. The initialisation screen shows a summary of the current selection and offers the option to change the network service level for either the next path segment (indicated by "next sector only") or the remaining part of the route. In FIG. 11A, it is shown that consignment C contains 16 pieces with its total weight and volume.

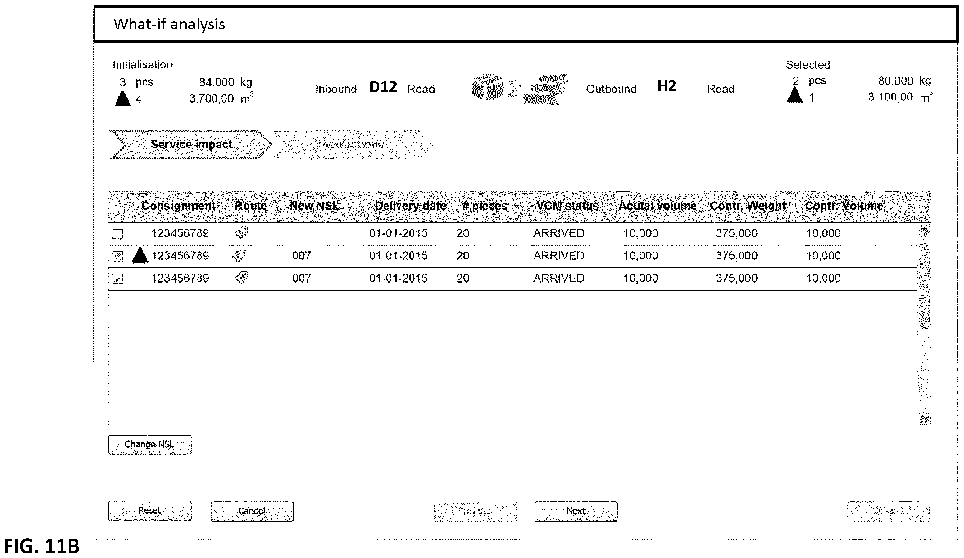

The next step, shown in FIG. 11B, involves a service impact screen. The service impact screen is displayed with a table of the selected consignments and/or pieces and the ability to select and see detailed information regarding the impact of the route change to be performed.

Again, the user is presented with the option to change the network service level NSL of the current selected consignment and/or piece and study the impact of the change. After the user has changed the service level, the service impact screen is refreshed.

When the user selects a specific consignment, the piece route details of the consignment are displayed showing the complete current route and the new calculated route of the piece. The complete route of the piece is displayed as a chain of blocks with the location codes displayed in each block. The locations may be distinguished, e.g. by colour, between locations where the piece has already been confirmed (here, D12) and locations that are downstream of the current location. The recalculated route reflects the new route for mail piece P1.

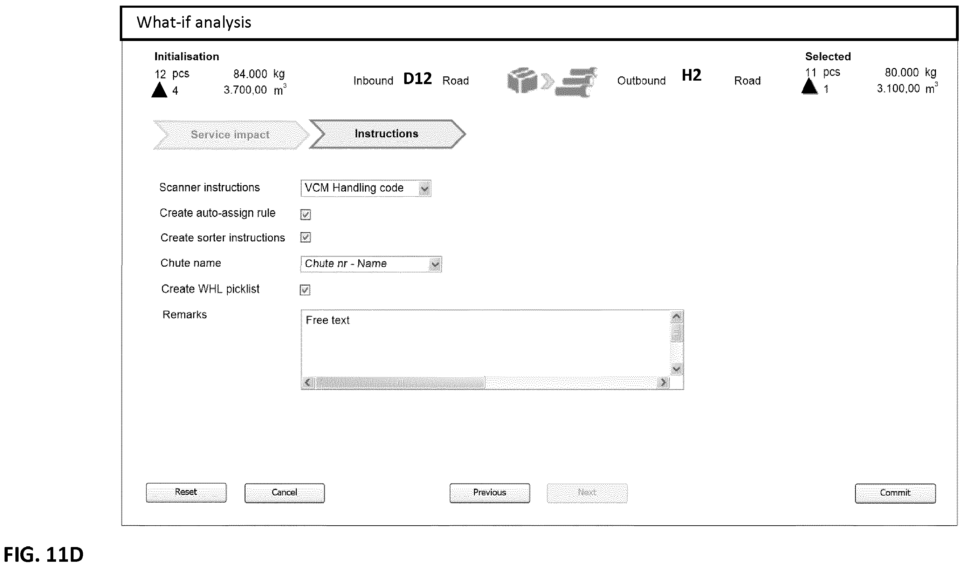

If the user selects "next step" in the service impact screen shown in FIG. 11B, the instruction screen of FIG. 11D is displayed. As mentioned above, the computer system 2 is configured to provide routing instructions to routing devices 4 at the network stations in accordance with the selected outbound delivery pipeline or the warehouse location. Routing devices may include automatic routers located e.g. at conveyor belts as shown in FIG. 8B or handheld devices applied by workers in the network stations manually scanning pieces for sorting, wherein further routing instructions may be displayed on the devices. The routing devices 4 are updated automatically when planners change the past segment and associated pipeline for a particular piece of a consignment when the measured weight and/or volume deviates from the weight/volume indicated in the delivery order. In the instruction screen of FIG. 11D, the user can indicate if there are scanning instructions that need to be changed or added, whether an automated assign rule should be created, whether sorter instructions need to be created, changed or added and/or whether a warehouse pickup list should be created.

One option mentioned above for a piece P1 having arrived at network station H2 is to reroute the piece back to network station H1, if need be by changing the service level of the piece to express delivery for at least the path segment from network station H2 to H1. Another option for the user would be to create a new pipeline from network station H2 to network station H3.

As can be seen from FIG. 3, a path segment PS does not exist between network stations H2 and H3 and, hence, no pipelines can exist there either. By creating a temporary pipeline from H2 to H3, chances increase that the piece P1 may still be delivered within the agreed delivery time at the destination location associated with depot D31. Once the pipeline is created, other pieces (e.g. pieces to be transferred from network station D21 to network station D31) may be assigned to the temporary pipeline to avoid that a vehicle only carries the original single piece.

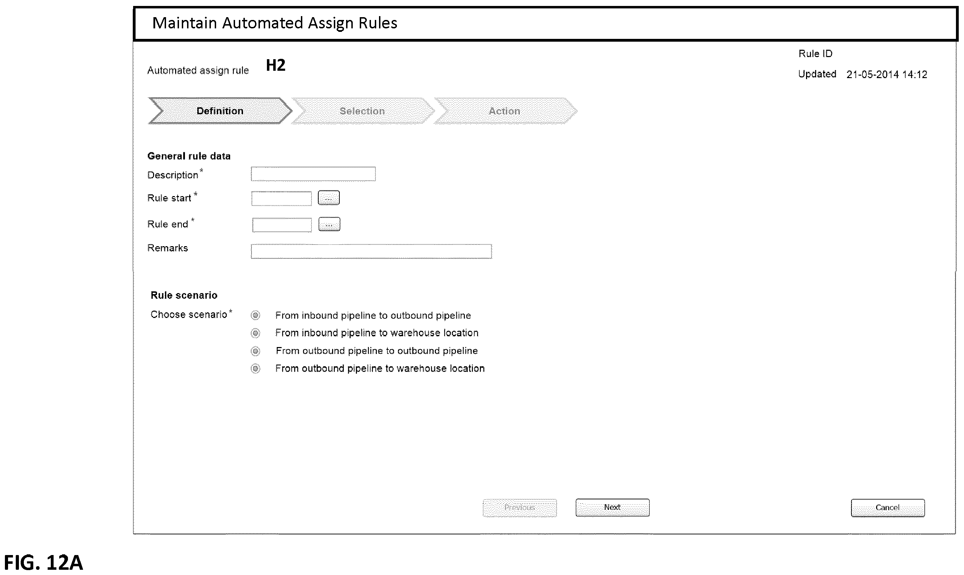

Assigning and/or reassigning pieces to selected or newly created outbound pipelines may be performed automatically, as will now be described in further detail with reference to FIGS. 12A-12C. The computer system 2 may be configured to define one or more conditions and to automatically assign pieces to the selected outbound pipeline or the new outbound pipeline when the defined conditions are met. The auto-assign rules enable other pieces to automatically use selected or newly created pipelines of the delivery network.

The automatic assign rules are used to automatically execute assign actions for a specific network station, wherein the assign actions comprise assigning pieces to a delivery pipeline. The rules may be setup through a wizard which guides the user (planner) through different screens. An automated assign rule can also be set as a result of a what-if scenario in which the user has indicated to create an automated assign rule from the current what-if scenario, as shown in FIG. 11D.

When an automated assign rules is created, the wizard may provide the user with a number of screens as shown in FIGS. 12A-12C.

In FIG. 12A, a definition screen is used wherein parameters can be set for the definition of a rule, like the name of the rule, the validity time of the rule and the type of scenario (e.g. inbound to outbound, inbound to warehouse, warehouse to outbound, etc.). When the user is editing an existing rule, fields may be pre-populated.

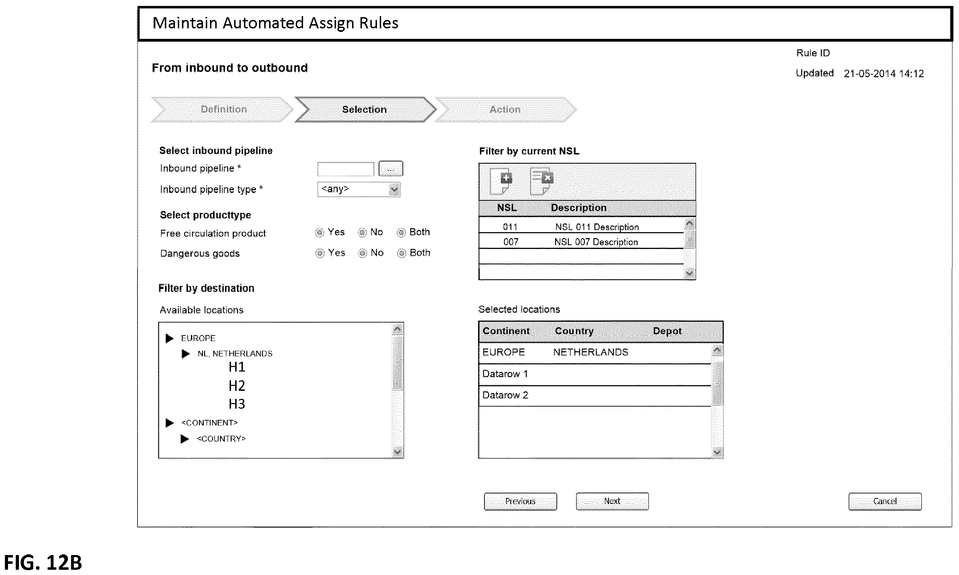

FIG. 12B shows the successive selection screen. The selection screen gives the user the ability to enter the selection criteria that will be used by the computer system 2 to select specific consignments and/or pieces based on origin, destination, product type or service level.

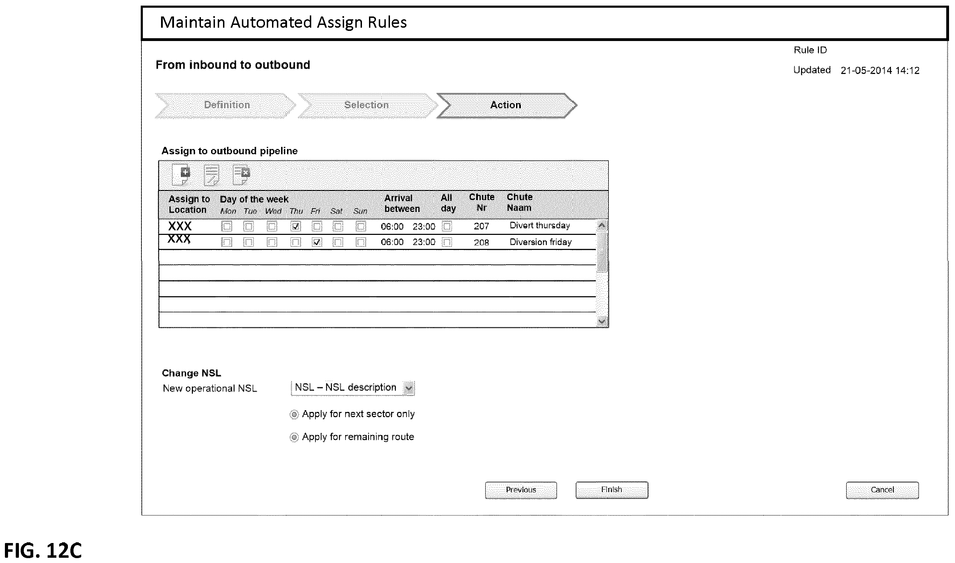

FIG. 12C shows an action screen that gives the user the option to enter at what point in time the rule needs to be applied. The user can enter a specific pipeline, the expected arrival date, time or day at which the rule should be repeatedly executed. The action screen captures the data of the new next destination requirements which the computer system 2 will automatically process in the background.

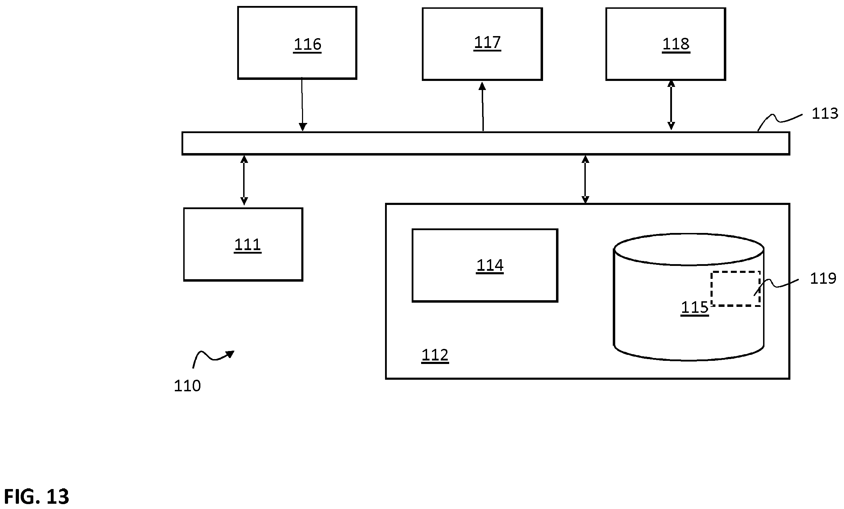

FIG. 13 is a schematic block diagram of a general system, such as the computer system 2.

As shown in Fig. 13, the data processing system 110 may include at least one processor 111 coupled to memory elements 112 through a system bus 113. As such, the data processing system may store program code within memory elements 112. Further, the processor 111 may execute the program code accessed from the memory elements 112 via a system bus 113. In one aspect, the data processing system may be implemented as a computer that is suitable for storing and/or executing program code. It should be appreciated, however, that the data processing system 110 may be implemented in the form of any system including a processor and a memory that is capable of performing the functions described within this specification.

The memory elements 112 may include one or more physical memory devices such as, for example, local memory 114 and one or more bulk storage devices 115. The local memory may refer to random access memory or other non-persistent memory device(s) generally used during actual execution of the program code. A bulk storage device may be implemented as a hard drive or other persistent data storage device. The processing system 110 may also include one or more cache memories (not shown) that provide temporary storage of at least some program code in order to reduce the number of times program code must be retrieved from the bulk storage device 115 during execution.

Input/output (I/O) devices depicted as an input device 116 and an output device 117 optionally can be coupled to the data processing system. Examples of input devices may include, but are not limited to, a keyboard, a pointing device such as a mouse, or the like. Examples of output devices may include, but are not limited to, a monitor or a display, speakers, or the like. Input and/or output devices may be coupled to the data processing system either directly or through intervening I/O controllers.

In an embodiment, the input and the output devices may be implemented as a combined input/output device (illustrated in FIG. 13 with a dashed line surrounding the input device 116 and the output device 117). An example of such a combined device is a touch sensitive display, also sometimes referred to as a "touch screen display" or simply "touch screen". In such an embodiment, input to the device may be provided by a movement of a physical object, such as e.g. a stylus or a finger of a user, on or near the touch screen display.

A network adapter 118 may also be coupled to the data processing system to enable it to become coupled to other systems, computer systems, remote network devices, and/or remote storage devices through intervening private or public networks. The network adapter may comprise a data receiver for receiving data that is transmitted by said systems, devices and/or networks to the data processing system 110, and a data transmitter for transmitting data from the data processing system 110 to said systems, devices and/or networks. Modems, cable modems, and Ethernet cards are examples of different types of network adapter that may be used with the data processing system 110.

As pictured in FIG. 13, the memory elements 112 may store an application 119. In various embodiments, the application 119 may be stored in the local memory 114, the one or more bulk storage devices 115, or apart from the local memory and the bulk storage devices. It should be appreciated that the data processing system 110 may further execute an operating system (not shown in FIG. 9) that can facilitate execution of the application 119. The application 119, being implemented in the form of executable program code, can be executed by the data processing system 110, e.g., by the processor 111. Responsive to executing the application, the data processing system 110 may be configured to perform one or more operations or method steps described herein.

In one aspect of the present invention, the data processing system 110 may represent the computer system 2 as shown in FIG. 2A of FIG. 3.

Various embodiments of the invention may be implemented as a program product for use with a computer system, where the program(s) of the program product define functions of the embodiments (including the methods described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored. The computer program may be run on the processor 111 described herein.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of embodiments of the present invention has been presented for purposes of illustration, but is not intended to be exhaustive or limited to the implementations in the form disclosed. Many modifications and variations will be apparent to those of ordinary skill in the art without departing from the scope and spirit of the present invention. The embodiments were chosen and described in order to best explain the principles and some practical applications of the present invention, and to enable others of ordinary skill in the art to understand the present invention for various embodiments with various modifications as are suited to the particular use contemplated.

It is to be understood that any feature described in relation to any one embodiment may be used alone, or in combination with other features described, and may also be used in combination with one or more features of any other of the embodiments, or any combination of any other of the embodiments. Moreover, the invention is not limited to the embodiments described above, which may be varied within the scope of the accompanying claims.

## Claims

1. A mail piece routing system configured for routing a mail piece (PI, P2) through a delivery network (1) comprising a first network station, a second network station located downstream of the first network station and a third network station located downstream of the second network station, wherein the mail routing system comprises:
a computer system (2);
at least one measurement system (3) located at the first network station, connected to the computer system, configured for measuring physical characteristics, e.g. weight, shape, volume, stack ability, of the mail piece;
at least one routing device (4) located at the second network station, connected to the computer system and
wherein the mail piece routing system is configured to:
- receive, at the computer system (2), an electronic delivery order comprising information indicative of an origin address associated with the first network station, a destination address associated with the third network station, and physical characteristics of the mail piece;
- calculate, at the computer system (2), a scheduled path for delivery of the mail piece upon receipt of the delivery order, wherein the scheduled path is defined from successive path segments between network stations in the delivery network from the first network station, via at least the second network station to the third network station, the path segments including a first path segment outbound from the first network station, a second path segment outbound from the second network station and a third path segment inbound to the third network station;
- assign, by the computer system (2), the mail piece to a plurality of delivery pipelines between the first network station and the third network station on the basis of the information comprised in the electronic delivery order, the plurality of delivery pipelines comprising at least a first delivery pipeline outbound from the first network station and defined over the first path segment, a second delivery pipeline outbound from the second network station and defined over the second path segment and a third delivery pipeline inbound to the third network station and defined over the third path segment, wherein the plurality of assigned delivery pipelines relate to a delivery time for delivery of the mail piece at the delivery address;
- measure the physical characteristics of the mail piece by the measurement system (3) at the first network station; wherein
- the computer system (2) is configured to have access to a database, the database containing actual entries for physical characteristics as measured by the measurement system,
**characterized in that** the routing device (4) comprises a conveyer belt and the computer system is further configured to:
- set the routing device (4) at the second network station from the computer system to route the mail piece to an outbound port of the second network station associated with the delivery pipeline;
- determine that the mail piece is to be reassigned to at least one further delivery pipeline, different from the second delivery pipeline, outbound from the second network station when a difference is detected between physical characteristics indicated by the information comprised in the delivery order and the corresponding actual entries in the database, the corresponding actual entries being measured by the measurement system (3) at the first network station;
- automatically reassign the mail piece to the at least one further delivery pipeline when said difference is detected;
- set the routing device (4) at the second network station from the computer system to route the mail piece to a further outbound port of the second network station associated with the further delivery pipeline when said difference is detected.

2. The mail piece routing system according to claim 1, wherein the computer system (2) is configured to recalculate a further path segment, different from the second path segment, outbound from the second network station and inbound to a fourth network station and associated with the further delivery pipeline and wherein the mail piece routing system is configured for setting the routing device at the second network station to route the mail piece to a further outbound port associated with the further path segment.

3. The mail piece routing system according to claim 1 or 2, wherein mail piece routing system comprises one or more further measurement systems (3) located at further network stations downstream from the first network station and the database has further actual entries for corresponding physical characteristics as measured by the further measurement systems.

4. The mail piece routing system according to claim 3, wherein the mail piece routing system comprises a detection system for detecting deviations between the actual entries for the first network station and the further actual entries for the further network stations.

5. The mail piece routing system according to one or more of the preceding claims comprises a plurality of registration devices (5) in association with the delivery pipelines and wherein the computer system is configured to receive registration events from the registration devices of network stations located at opposite ends of the further path segments and to monitor from the registration events, progress of the delivery of the mail piece vis a vis the delivery time for the mail piece.

6. The mail routing system according to one or more of the preceding claims, wherein the computer system (2) is further configured to define one or more conditions regarding the physical characteristics of mail pieces and to automatically re-assign the mail piece to the further delivery pipeline and to set the routing device when the defined conditions are met.

7. The mail routing system according to one or more of the preceding claims, wherein the computer system (2) is configured, for each network station to display an inbound pipeline and an outbound pipeline associated with a delivery pipeline from at least one previous network station, if any, resp. a delivery pipeline to at least one successive network station, if any.

8. The mail routing system according to claim 7, wherein the computer system (2) is further configured to display an indicator for at least one of the inbound pipeline and the outbound pipeline of the network station for a set time interval, wherein the indicator is configured to distinguish between pieces registered as being placed on the inbound pipeline resp. the outbound pipeline for the time interval and pieces scheduled, following the delivery order, to be placed on the inbound pipeline resp. the outbound pipeline but not yet registered for the time interval.

9. The mail routing system according to one or more of the preceding claims, wherein the path segments are different for different delivery periods and/or different delivery service levels for delivery mail pieces.

10. The mail routing system according to one or more of the preceding claims, wherein the computer system (2) has access to historic information regarding physical characteristics of mail pieces obtained from the measurement system and wherein the computer system is further configured for selecting at least one of the first path segment and the first delivery pipeline on the basis of the historic information.

11. A method for routing mail pieces through a delivery network comprising a first network station, a second network station located downstream of the first network station and a third network station located downstream of the second network station, wherein the method comprises:
receiving an electronic delivery order at a computer system (2), the delivery order comprising information indicative of an origin address associated with the first network station, a destination address associated with the third network station, and physical characteristics of the mail piece;
calculating at the computer system (2), a scheduled path for delivery of the mail piece upon receipt of the delivery order, wherein the scheduled path is defined from successive path segments between network stations in the delivery network from the first network station, via at least the second network station to the third network station, the path segments including a first path segment outbound from the first network station, a second path segment outbound from the second network station and a third path segment inbound to the third network station;
assigning the mail piece to a plurality of delivery pipelines between the first network station and the third network station on the basis of the information comprised in the electronic delivery order, the plurality of delivery pipelines comprising at least a first delivery pipeline outbound from the first network station and defined over the first path segment, a second delivery pipeline outbound from the second network station and defined over the second path segment and a third delivery pipeline inbound to the third network station and defined over the third path segment, wherein the plurality of assigned delivery pipelines relate to a delivery time for delivery of the mail piece at the delivery address;
measuring the physical characteristics of the mail piece by a measurement system (3) at the first network station;
further **characterized by**
setting, at the computer system (2), a routing device (4) located at the second network station to route the mail piece to an outbound port of the second network station associated with the delivery pipeline, the routing device (4) comprising a conveyer belt;
determining, at the computer system (2), that the mail piece is to be reassigned to at least one further delivery pipeline, different from the second delivery pipeline, outbound from the second network station when a difference is detected between the physical characteristics indicated by the information comprised in the delivery order and corresponding actual entries in a database containing actual entries for physical characteristics as measured by the measurement system at the first network station;
automatically reassigning the mail piece to the at least one further delivery pipeline when said difference is detected;
setting the routing device (4) at the second network station from the computer system (2) to a further outbound port of the second network station associated with the further delivery pipeline when said difference is detected.

12. A computer system (2) for use in the mail piece routing system according to one or more of the claims 1-10.

13. A computer program or a suite of computer programs comprising at least one software code portion or a computer program product storing at least one software code portion, the at least one software code portion, when run on a computer system (2), being configured for executing the method according to claim 11.
